# EUROPEAN PATENT SPECIFICATION

(11) **EP 4 629 175 B1**
(45) Date of publication and mention of the grant of the patent: **28.10.2026**
(21) Application number: 24810004.2
(22) Date of filing: 04.03.2024
(51) Int. Cl.: G06T 5/60, G06T 5/70, G06T 5/77, G06T 11/00

(54) **METHOD AND APPARATUS FOR DETERMINING PICTURE GENERATION MODEL, METHOD AND APPARATUS FOR PICTURE GENERATION, COMPUTING DEVICE, STORAGE MEDIUM, AND PROGRAM PRODUCT**
VERFAHREN UND VORRICHTUNG ZUR BESTIMMUNG EINES BILDERZEUGUNGSMODELLS, VERFAHREN UND VORRICHTUNG ZUR BILDERZEUGUNG, RECHENVORRICHTUNG, SPEICHERMEDIUM UND PROGRAMMPRODUKT
PROCÉDÉ ET APPAREIL DE DÉTERMINATION DE MODÈLE DE GÉNÉRATION D'IMAGE, PROCÉDÉ ET APPAREIL DE GÉNÉRATION D'IMAGE, DISPOSITIF INFORMATIQUE, SUPPORT DE STOCKAGE ET PRODUIT PROGRAMME

(30) Priority: 25.05.2023 CN 202310601130
(43) Date of publication of application: 08.10.2025
(73) Proprietor: Tencent Technology (Shenzhen) Company Limited, Shenzhen, Guangdong 518057 (CN)
(72) Inventor: ZHU, Cheng, Shenzhen, Guangdong 518057 (CN)
(74) Representative: Novagraaf International SA
(86) International application number: PCT/CN2024/079813
(87) International publication number: WO 2024/239755

(56) References cited:
- WO-A1-2023/018752
- CN-A- 113 537 487
- CN-A- 114 255 381
- CN-A- 115 222 630
- CN-A- 116 977 459
- LIU NAN ET AL: "Compositional Visual Generation with Composable Diffusion Models", 23 October 2022, SPRINGER INTERNATIONAL PUBLISHING, PAGE(S) 423 - 439, XP047637852
- SALIMANS TIM ET AL: "Progressive Distillation for Fast Sampling of Diffusion Models", ARXIV.ORG, 1 June 2022 (2022-06-01), XP093362913, Retrieved from the Internet <URL:https://arxiv.org/abs/2202.00512>

## Description

### RELATED APPLICATION

This application claims priority to Chinese Patent Application No. 202310601130.X, filed on May 25, 2023 and entitled "METHOD AND APPARATUS FOR DETERMINING IMAGE GENERATION MODEL, AND IMAGE GENERATION METHOD AND APPARATUS".

### FIELD OF THE TECHNOLOGY

The present disclosure relates to the field of machine learning, and specifically, to a method and an apparatus for determining an image generation model, an image generation method and apparatus, a computing device, a computer-readable storage medium, and a computer program product.

### BACKGROUND OF THE DISCLOSURE

With the vigorous development of machine learning technologies, various machine learning models have played an increasingly more important role in different fields. For example, in fields involving image recognition and image classification, such as content review, a corresponding machine learning model may replace manual work and complete a large number of image processing tasks efficiently and accurately. The machine learning models often need to be trained based on a large number of image samples before put into use, to achieve expected performance.

The publications of Liu Nan et al., "Compositional Visual Generation with Composable Diffusion Models", Proceedings of the ECCV 2022, 23 October 2022, PAGES 423 - 439, and Tim Salimans et al., "Progressive Distillation for Fast Sampling of Diffusion Models", arXiv.org, 7 June 2022, URL:https://arxiv.org/abs/2202.00512v2, as well as patent document CN115222630A represent background art as to methods of image generation.

### SUMMARY

In view of this, the present disclosure provides a method and an apparatus for determining an image generation model, an image generation method and apparatus, a computing device, a computer-readable storage medium, and a computer program product.

According to an aspect of the present disclosure, a method for determining an image generation model is provided, including: obtaining first guidance information characterizing a first image feature and second guidance information characterizing a second image feature; inputting the first guidance information and a first noise-containing image into a noise prediction model, to identify a first noise feature from the first noise-containing image; inputting the second guidance information and a second noise-containing image into the noise prediction model, to identify a second noise feature from the second noise-containing image; inputting combined guidance information and a third noise-containing image into a pre-selected model having a same model structure as the noise prediction model, to identify a third noise feature from the third noise-containing image, the combined guidance information including the first guidance information and the second guidance information; combining the first noise feature and the second noise feature to obtain a combined noise feature; and adjusting a model parameter of the pre-selected model based on a difference between the combined noise feature and the third noise feature, to update the pre-selected model.

According to another aspect of the present disclosure, an image generation method is provided, including: obtaining guidance information; inputting the guidance information into an image generation model determined through the method for determining an image generation model described according to the foregoing aspect; and obtaining an image corresponding to the guidance information based on an output of the image generation model.

According to still another aspect of the present disclosure, an apparatus for determining an image generation model is provided, including: an obtaining module, configured to obtain first guidance information characterizing a first image feature and second guidance information characterizing a second image feature; a first generation module, configured to input the first guidance information and a first noise-containing image into a noise prediction model, to identify a first noise feature from the first noise-containing image; a second generation module, configured to input the second guidance information and a second noise-containing image into the noise prediction model, to identify a second noise feature from the second noise-containing image; a third generation module, configured to input combined guidance information and a third noise-containing image into a pre-selected model having a same model structure as the noise prediction model, to identify a third noise feature from the third noise-containing image, the combined guidance information including the first guidance information and the second guidance information; a determination module, configured to combine the first noise feature and the second noise feature to obtain a combined noise feature; and an update module, configured to adjust a model parameter of the pre-selected model based on a difference between the combined noise feature and the third noise feature, to update the pre-selected model.

According to still another aspect of the present disclosure, a computing device is provided, including: a memory, configured to store a computer-executable instruction; and a processor, configured to perform the method described according to the foregoing aspect when the computer-executable instruction is executed by the processor.

According to still another aspect of the present disclosure, a computer-readable storage medium is provided, having a computer-executable instruction stored therein, the computer-executable instruction, when executed, performing the method described according to the foregoing aspect.

According to still another aspect of the present disclosure, a computer program product is provided, including a computer-executable instruction, the computer-executable instruction, when executed by a processor, implementing the operations of the method described according to the foregoing aspect.

According to the method for determining an image generation model provided in the present disclosure, the first noise feature and the second noise feature may be obtained respectively based on the first guidance information and the second guidance information through the noise prediction model. The third noise feature is obtained based on the combined guidance information through the pre-selected model having the same structure as the noise prediction model. Then the model parameter of the pre-selected model is updated based on a difference between the third noise feature and the combined noise feature obtained based on the first noise feature and the second noise feature. The model parameter of the pre-selected model may be optimized continuously through iterative performing of the foregoing method for determining an image generation model, so that when the determined image generation model outputs image data, global information involved in the combined guidance information can be reflected, and local information involved in the first guidance information and the second guidance information is not blurred or ignored. Therefore, when the determined image generation model is used, a large number of image samples having expected labels that can accurately reflect content of the guidance information may be rapidly generated by inputting the guidance information, which helps reduce costs of obtaining the image samples and improve quality of the image samples. When these high-quality image samples are used to train an image recognition model or an image classification model, training efficiency of these models may be improved, and computing resources may be saved, thereby facilitating optimization of processing performance of these models in fields such as content review.

These and other aspects of the present disclosure are to be clear according to the embodiments described below, and are to be illustrated with reference to the embodiments described below.

### BRIEF DESCRIPTION OF THE DRAWINGS

More details, features, and advantages of the present disclosure are disclosed in the following description of exemplary embodiments with reference to the accompanying drawings. In the accompanying drawings:
FIG. 1 schematically shows an exemplary application scenario in which a technical solution provided in the present disclosure may be applied.
FIG. 2A schematically shows an exemplary flowchart of a method for determining an image generation model according to some embodiments of the present disclosure.
FIG. 2B schematically shows another exemplary flowchart of a method for determining an image generation model according to some embodiments of the present disclosure.
FIG. 3 schematically shows an exemplary image according to some embodiments of the present disclosure.
FIG. 4 schematically shows an exemplary training process of a text generation model according to some embodiments of the present disclosure.
FIG. 5 schematically shows an exemplary model structure of a noise prediction model and a pre-selected model according to some embodiments of the present disclosure.
FIG. 6 schematically shows an exemplary training architecture of a text-to-image conversion model according to some embodiments of the present disclosure.
FIG. 7A schematically shows an example of a diffusion process according to some embodiments of the present disclosure.
FIG. 7B schematically shows an example of a noise prediction process according to some embodiments of the present disclosure.
FIG. 8 schematically shows an exemplary training architecture for determining an image generation model according to some embodiments of the present disclosure.
FIG. 9 schematically shows an exemplary internal structure of a pre-selected model according to some embodiments of the present disclosure.
FIG. 10 schematically shows an exemplary flowchart of an image generation method according to some embodiments of the present disclosure.
FIG. 11 schematically shows an exemplary block diagram of an apparatus for determining an image generation model according to some embodiments of the present disclosure.
FIG. 12 schematically shows an exemplary block diagram of an image generation apparatus according to some embodiments of the present disclosure.
FIG. 13 schematically shows an exemplary block diagram of a computing device according to some embodiments of the present disclosure.

### DESCRIPTION OF EMBODIMENTS

Before embodiments of the present disclosure are described in detail, some related concepts are explained first.

Artificial Intelligence (AI) is a theory, method, technology and application system that uses a digital computer or a machine controlled by the digital computer to simulate, extend, and expand human intelligence, perceive the environment, acquire knowledge, and use knowledge to obtain the best result. In other words, AI is a comprehensive technology in computer science and attempts to understand the essence of intelligence and produce a new intelligent machine that can respond in a manner similar to human intelligence. AI is to study the design principles and implementation methods of various intelligent machines, to enable the machines to have the functions of perception, reasoning, and decision-making.

The AI technology is a comprehensive discipline, and involves a wide range of fields including both the hardware-level technology and the software-level technology. The basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a speech processing technology, a natural language processing (NLP) technology, and machine learning/deep learning.

CV is a field of science that studies how to use a machine to "see", and furthermore, that uses a camera and a computer to replace human eyes to perform machine vision such as identification and measurement on a target, and further perform graphic processing, so that the computer processes the target into an image more suitable for human eyes to observe, or an image transmitted to an instrument for detection. As a scientific discipline, CV studies related theories and technologies and attempts to establish an AI system that can obtain information from images or multidimensional data. The CV technology generally includes technologies such as image processing, image recognition, image semantic understanding, image retrieval, optical character identification (OCR), video processing, video semantic understanding, video content/behavior identification, three-dimensional object reconstruction, 3D technology, virtual reality, augmented reality, and simultaneous localization and mapping, and further includes common biometric identification technologies such as face identification and fingerprint identification.

Key technologies of the speech technology include an automatic speech recognition (ASR) technology, a text-to-speech (TTS) technology, and a voiceprint recognition technology. The ability of a computer to listen, see, speak, and feel is the future development direction of human-computer interaction, and speech is to become one of the most promising human-computer interaction manners in the future.

NLP is an important direction in the fields of computer science and AI, which studies various theories and methods that can implement effective communication between humans and computers through natural language. NLP is a science that integrates linguistics, computer science, and mathematics. Therefore, research in this field relates to natural languages, namely, languages daily used by people, and therefore is closely related to the study of linguistics. The NLP technologies usually include technologies such as text processing, semantic understanding, machine translation, robot question-answering, and knowledge graphs.

The ML is an interdisciplinary field, which involves a plurality of disciplines such as the theory of probability, statistics, the approximation theory, convex analysis, and the theory of algorithm complexity. The ML specializes in studying how a computer simulates or implements learning behaviors of humans to obtain new knowledge or skills, and reorganize an existing knowledge structure, so as to keep improving performance thereof. The ML is the core of AI, is a basic way to make the computer intelligent, and is applied to various fields of AI. The ML and the deep learning usually include technologies such as an artificial neural network, a confidence network, reinforcement learning, transfer learning, inductive learning, and learning from demonstration.

An autonomous driving technology usually includes technologies such as a high-definition map, environmental perception, behavioral decision making, path planning, and motion control. The autonomous driving technology has broad application prospects.

With the research and progress of AI technologies, the AI technology has been researched and applied in many fields, such as a common smart home, a smart wearable device, a virtual assistant, a smart speaker, smart marketing, unmanned driving, automatic driving, an unmanned aerial vehicle, a robot, smart medical care, smart customer service, and the like. It is believed that with the development of technologies, the AI technology is to be applied in more fields and plays increasingly important value.

The solutions provided in the embodiments of the present disclosure involve the technologies such as ML, NLP, and CV of AI, which are specifically described below through the embodiments.

In addition, "guidance information" mentioned in the present disclosure may be text information for guiding a model to generate a corresponding image. Exemplarily, the guidance information may be provided manually by a user, or may be automatically generated through an algorithm or a model, or may be provided through a combination thereof.

A "frozen model" mentioned in the present disclosure may refer to a model whose parameters have been frozen. For example, at least some model parameters of the frozen model are fixed, and are not updated with execution of the method for determining an image generation model described in the embodiments of the present disclosure. Alternatively, the frozen model may be an existing model or a pre-trained model. More specifically, in the present disclosure, the frozen model may be a trained model that generates image data based on input text data, and an image characterized by outputted image data may include an object depicted through the input text data. For example, the input text data may be configured for depicting an object such as the sun or a house, and the image characterized by the outputted image data may include the object such as the sun or the house. Exemplarily, the frozen model may be a stable diffusion (SD) model, such as an SD V2.0 model, or another image generation model may be used as the frozen model.

A "text generation model" mentioned in the present disclosure may refer to a model that can output a text based on a feedback of an input (such as an input text). For example, the text generation model may feed back an output text by expanding or rewriting the input text according to a preset rule. Exemplarily, the text generation model may be a chat generative pre-trained transformer (ChatGPT) model, or another type of text generation model may be used.

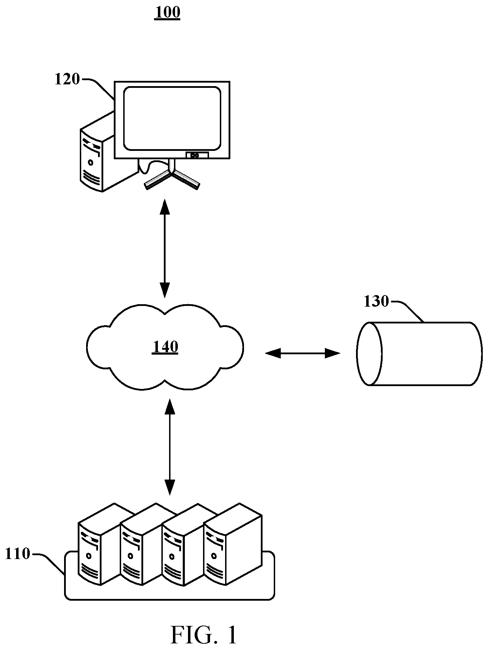

FIG. 1 schematically shows an exemplary application scenario 100 in which a technical solution provided in the present disclosure may be applied.

As shown in FIG. 1, the scenario 100 may include a server 110. The server 110 may be a single server or a server cluster, on which an application for performing the method for determining an image generation model and/or the image generation method according to various embodiments of the present disclosure may be run, and exemplarily, relevant data may be further stored. The server 110 may further run another application and store other data. For example, the server 110 may include a plurality of virtual hosts configured to run different applications and provide different services.

The scenario 100 may further include a terminal device 120. The terminal device 120 may be various types of devices, for example, a mobile phone, a tablet computer, a notebook computer, a wearable device such as a smart watch, and an on-board device. Exemplarily, the method for determining an image generation model or the image generation method according to various embodiments of the present disclosure may also be performed by the terminal device 120, for example, performed by an application deployed on the terminal device 120. Alternatively, the method for determining an image generation model or the image generation method according to various embodiments of the present disclosure may also be performed by a combination of the terminal device 120 and the server 110. For example, some of the operations included in the method for determining an image generation model or the image generation method according to various embodiments of the present disclosure may be performed by the terminal device 120, and some of the operations may be performed by the server 110.

Exemplarily, a user may input data such as text information through an input interface (such as a keyboard, a microphone, or a data interface) of the server 110 or the terminal device 120. Alternatively, the data may be pre-stored in a storage apparatus of the server 110 or the terminal device 120 or another external storage apparatus and is automatically read when needed. The server 110 and/or the terminal device 120 may perform the method for determining an image generation model or the image generation method provided in the present disclosure. The user may view, through an output interface (such as a display or a touchscreen) of the server 110 or the terminal device 120, various processing data, update parameters, and the like in the process of determining the image generation model, and view an image generated through the determined image generation model, and the like.

In addition, the scenario 100 may further include a database device 130. The database device 130 may be regarded as an electronic file cabinet, namely, a place in which electronic files are stored. A user may perform an operation such as adding, querying, updating, or deleting data in a file. The so-called "database" is a data set that is stored together in a certain manner, can be shared with a plurality of users, has as little redundancy as possible, and is independent of an application. Exemplarily, the database device 130 may be configured to store data or a file such as a text or an image. For example, the server 110 or the terminal device 120 may obtain required data from the database 130, or may transmit (for example, upload) generated or updated data to the database 130.

The server 110, the terminal device 120, and the database 130 may communicate with each other through a network 140. The network 140 may be a wired network connected through a cable or an optical fiber, or may be a wireless network such as 2G, 3G, 4G, 5G, Wi-Fi, Bluetooth, ZigBee, or Li-Fi.

With the rapid development of ML technologies, in application fields involving image recognition, image classification, and the like, various ML models are increasingly being used to implement tasks such as image recognition and image classification. Although this helps improve task processing efficiency and save manpower and time costs, the performance of this type of ML model is closely related to quality and a quantity of training samples. However, due to limitations of the application fields, it is often difficult to obtain a large number of high-quality training samples, and a lot of manpower and time costs are required. Specifically, in an application field involving image processing such as content review, many problems such as lack of data, label incompleteness, poor quality, and data underutilization are often faced. Lack of data is often manifested as limited data sources or difficulty in collecting data. For example, available data may depend heavily on data provided by a model user. If the user may provide less data, it is difficult to obtain sufficient training sample data to optimize the model to expected performance. The label incompleteness is mainly manifested in that data annotation standards have different modalities, different perspectives, and the like. For supervised training, obtained initial data generally needs to be annotated. To be specific, a corresponding label is assigned to each sample. Such annotation is often manually completed. Due to a difference in annotation standards and impact of a perspective of an object in an image, a problem that the annotated labels are incomplete often occurs. The poor quality derives from a fact that much data is collected from public data on the Internet, which results in uneven image quality. For example, some images have very low pixels, which greatly affects improvement of model performance. The data underutilization is mainly manifested in that only information about an image is basically considered for example during image classification, and other multi-modal information such as text extended behind the image is ignored. Based on the above, in a conventional sample obtaining manner, a large amount of time generally needs to be consumed to accumulate and annotate relevant data. This large amount of time consumption is contrary to requirements of fast going on-line or iteration of services in related application fields. In addition, quality of a sample obtained in this manner is difficult to guarantee, and underutilization of multidimensional information also has adverse impact on quality and efficiency of model training.

Based on the foregoing considerations, a solution for determining an image generation model and an image generation solution are provided, so as to allow a large number of high-quality images having expected labels to be rapidly generated for inputted text. These images may be used as samples for a training process of a related model. This may greatly shorten an obtaining speed of image samples, and may ensure that the image samples have expected image quality, thereby helping improve overall efficiency of model going on-line or optimization, and helping improve model performance. The solution for determining an image generation model and the image generation solution proposed in the present disclosure are to be described in detail below with reference to the accompanying drawings.

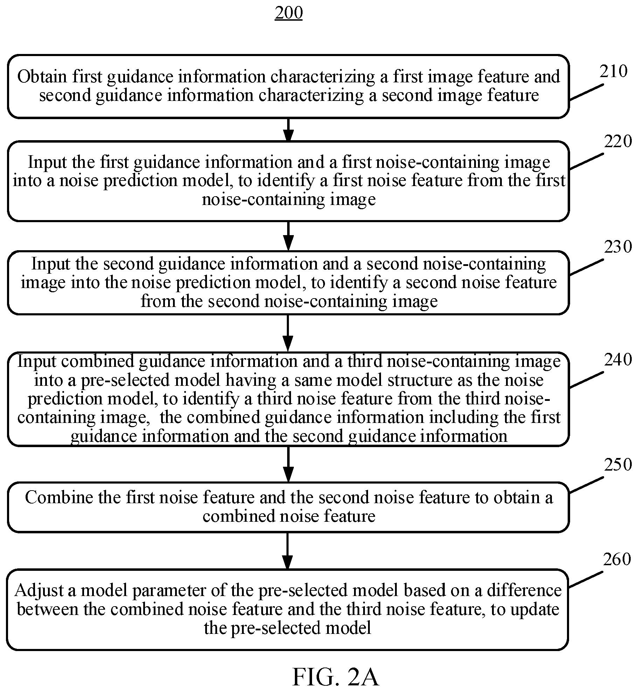

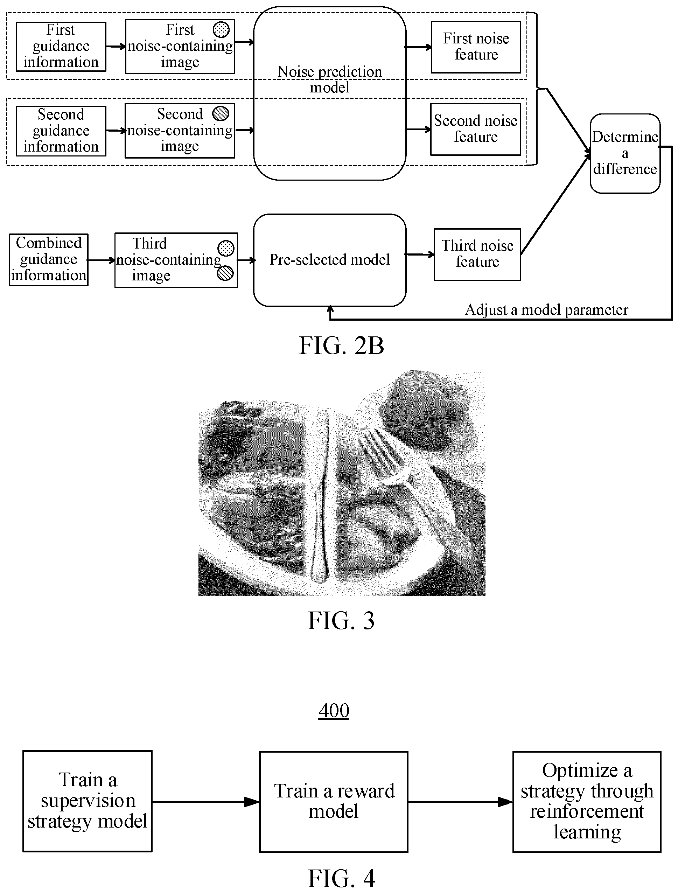

FIG. 2A schematically shows an exemplary flowchart of a method 200 for determining an image generation model according to some embodiments of the present disclosure. FIG. 2B schematically shows an exemplary flowchart of a method 200 for determining an image generation model according to some embodiments of the present disclosure. Exemplarily, the method 200 may be applied to the scenario 100 shown in FIG. 1, for example, may be deployed on the server 110, the terminal device 120, or a combination thereof in a form such as an application. As shown in FIG. 2A and FIG. 2B, the method 200 may include operation 210 to operation 260, which are specifically as follows.

In operation 210, first guidance information and second guidance information may be obtained. The first guidance information is configured for characterizing a first image feature, and the second guidance information is configured for characterizing a second image feature.

The first guidance information may include or may be descriptive information of the first image feature. The second guidance information may include or may be descriptive information of the second image feature. The first guidance information and the second guidance information may be descriptive information for different image features of the same image. The same image is, for example, a to-be-generated image. The first image feature and the second image feature are different image features in the to-be-generated image. The first guidance information and the second guidance information may be obtained from data provided manually, or may be obtained from data that is automatically generated through an algorithm or a model, or may be obtained from data that is manually provided and processed through an algorithm and a model, or the like. Exemplarily, the first guidance information and the second guidance information may be obtained from information provided in a form of text data, or may be obtained from information provided in another data form (for example, a data form such as voice).

Exemplarily, the first guidance information and the second guidance information may each include descriptions of one or several image features in the same image or different images. The same image or different images are, for example, to-be-generated images. In the present disclosure, the image feature described by the guidance information may be, for example, an object or a background included in an image, or another feature related to the object or the background. For example, the first guidance information may include descriptive information of a first image feature (for example, a plate or a cup) in an image, and the second guidance information may include descriptive information of a second image feature (for example, an apple or a pear) in the image. Furthermore, exemplarily, in addition to the first guidance information and the second guidance information, more guidance information such as third guidance information and fourth guidance information may be further obtained.

In operation 220, the first guidance information and a first noise-containing image may be inputted into a noise prediction model, to identify a first noise feature from the first noise-containing image. The first noise-containing image may include or may only include the first image feature besides of noise. The noise prediction model is a pre-training model with at least some model parameters frozen. The parameters being frozen means that the model parameters of the model are fixed and not updated.

In the embodiments of the present disclosure, the noise prediction model is, for example, a frozen model. The first noise feature (or referred to as first prediction) may be generated through the noise prediction model based on the first guidance information. The noise prediction model is configured to output an image based on the inputted guidance information, so that the outputted image includes an image feature as described by the inputted guidance information. The outputted image is an image with the noise feature being removed.

Exemplarily, the obtained first guidance information may be directly inputted into the noise prediction model, or the first guidance information may be preprocessed and then inputted into the noise prediction model. Exemplarily, the first noise feature may be obtained based on an output of the noise prediction model, or the first noise feature may be obtained based on intermediate processing data of the noise prediction model. Moreover, exemplarily, the first noise feature may be directly obtained based on the output or the intermediate processing data of the noise prediction model, or the first noise feature may be obtained by processing the output or the intermediate processing data of the noise prediction model. Exemplarily, the noise prediction model may be a trained image generation model, which may output image data based on the inputted guidance information. The outputted image data may represent an image of what is described by the guidance information. For example, if the inputted guidance information includes information related to an apple, the image represented by the outputted image data may include an apple as described by the information related to the apple. Exemplarily, a pre-trained image generation model may be selected as the noise prediction model, such as the SD model mentioned above. As mentioned above, at least some model parameters of the noise prediction model are frozen and are not updated with execution of the method 200.

In operation 230, the second guidance information and a second noise-containing image are inputted into the noise prediction model, to identify a second noise feature from the second noise-containing image. The second noise-containing image may include or only include the second image feature besides of noise.

In the embodiments of the present disclosure, the second noise feature (or referred to as second prediction) may be generated through the noise prediction model based on the second guidance information. Exemplarily, the second noise feature may be generated based on the second guidance information through a process similar to operation 220. The noise prediction model used in operation 230 and the noise prediction model used in operation 220 may be a unified model, or two models with the same structure and parameters. Exemplarily, if other guidance information or the like exists, another noise feature or the like corresponding to the other guidance information may be obtained in the same manner as operation 220.

In operation 240, combined guidance information and a third noise-containing image are inputted into a pre-selected model having a same model structure as the noise prediction model, to identify a third noise feature from the third noise-containing image, the combined guidance information including the first guidance information and the second guidance information. The third noise-containing image may include or may only include the first image feature and the second image feature besides of noise.

The combined guidance information, the first guidance information, and the second guidance information may be different descriptive information for the same image. The same image is, for example, an image to be generated through the image generation model. In an example, the combined guidance information may be descriptive information of the first image feature and the second image feature, or in other words, the combined guidance information is the first guidance information and the second guidance information. In another example, the combined guidance information may include descriptive information of the first image feature and the second image feature and additional information, or the combined guidance information includes the first guidance information, the second guidance information, and the additional information.

The combined guidance information may include all the descriptions for the image features included in the first guidance information and the second guidance information, and also include additional information not reflected in the first guidance information and the second guidance information. The additional information may describe, for example, a spatial relationship between two or more image features. In a case that the first guidance information may include or may be descriptive information of a first image feature (for example, a plate or a cup) in the image, and the second guidance information may include or may be descriptive information of a second image feature (for example, an apple or a pear) in the image, the combined guidance information may not only include information that is the same as or similar to the descriptive information of the first image feature (for example, a plate or a cup) in the first guidance information, but also include information that is semantically the same as or similar to the descriptive information of the second image feature (for example, an apple or a pear) in the second guidance information, and further include additional information. The additional information is for example specifying that the plate is below the apple. Exemplarily, the first guidance information and the second guidance information may be combined to obtain the combined guidance information. The combination may include combining information that is semantically the same as or similar to the descriptive information of the first image feature and the descriptive information of the second image feature, to obtain the combined guidance information. In the foregoing combination process, the additional information may be additionally combined. The same or similar semantics may be determined through semantic similarity.

Exemplarily, specific forms of the first guidance information, the second guidance information, and the combined guidance information may be restricted through a preset rule, and a specific relationship between the combined guidance information and the first guidance information and the second guidance information is restricted. Furthermore, exemplarily, in addition to the first guidance information and the second guidance information, more guidance information such as third guidance information and fourth guidance information may be further obtained. Correspondingly, the combined guidance information may include combined information of the first guidance information, the second guidance information, the third guidance information, and the fourth guidance information, additional information, and the like. Although a case in which the first guidance information and the second guidance information and one piece of combined guidance information are used is mainly described in the description of the present disclosure, the technical solution provided in the present disclosure is not only applicable to this case, but also applicable to a case in which three or more pieces of guidance information and one piece of combined guidance information are used.

In the embodiments of the present disclosure, the third noise feature (or referred to as third prediction) may be generated through a pre-selected model based on the combined guidance information. The pre-selected model and the noise prediction model have the same model structure. Exemplarily, the third noise feature may be generated based on the combined guidance information through a process similar to operations 220 and 230. A difference is that the pre-selected model used in operation 240 and the noise prediction models used in operations 220 and 230 have the same model structure, but some or all of the model parameters of the pre-selected model are adjustable rather than frozen during execution of the method 200.

In operation 250, the first noise feature and the second noise feature may be combined to obtain a combined noise feature.

Exemplarily, the first noise feature and the second noise feature may be combined according to a preset combination rule. For example, the combined noise feature (or referred to as combined prediction) is determined based on a sum, a weighted sum, a mean, a weighted mean, or the like of the first noise feature and the second noise feature. Exemplarily, if another noise feature or the like corresponding to another guidance information exists, the first noise feature, the second noise feature, the another noise feature, or the like may be combined to obtain the combined noise feature.

In operation 260, a model parameter of the pre-selected model may be adjusted based on a difference between the combined noise feature and the third noise feature, to update the pre-selected model. The updated pre-selected model may be used as the image generation model. Exemplarily, the combined noise feature may be regarded as an expected value or a truth value, a difference between the third noise feature and the combined noise feature is measured through a distance therebetween, and at least some model parameters of the pre-selected model are updated based on the distance. Exemplarily, the updating of the model parameters of the pre-selected model may be implemented based on gradient descent or another principle.

Operations of the foregoing method 200 are not necessarily performed in the described sequence, and at least some of the operations may be performed in parallel or in a reverse order from that shown or described. In addition, the foregoing method for determining an image generation model may be performed iteratively, until in a certain iteration, the difference between the combined noise feature and the third noise feature is less than or equal to a difference threshold, and exemplarily, another performance indicator also reaches an expected level, the iteration is stopped, and a model obtained in the last iteration is put into use as a well-trained image generation model. Alternatively, the iteration may be stopped when a quantity of iterations reaches an upper limit.

Through the foregoing method 200, the model parameter of the pre-selected model may be optimized, so that when the finally determined image generation model outputs image data, global information involved in the combined guidance information can be reflected, and local information involved in the first guidance information and the second guidance information is not blurred or ignored. Therefore, when the determined image generation model is used, a large number of image samples having expected labels that accurately reflects content of the guidance information may be rapidly generated by inputting the guidance information, which helps reduce costs of obtaining the image samples and improve quality of the image samples. When these high-quality image samples are used to train an image recognition model or an image classification model, training efficiency of these models may be improved, and computing resources may be saved, thereby facilitating optimization of processing performance of these models in fields such as content review.

In some embodiments, operation 210 may include: obtaining first basic information and second basic information; and inputting the first basic information and the second basic information into a text generation model, so that the text generation model performs at least one of expansion or modification on each of the first basic information and the second basic information according to a preset rule, to generate the first guidance information and the second guidance information. In some other embodiments, operation 210 may include: obtaining first basic information, second basic information, and combined basic information; and inputting the first basic information, the second basic information, and the combined basic information into a text generation model, so that the text generation model performs at least one of expansion or modification on each of the first basic information, the second basic information, and the combined basic information according to a preset rule, to generate first guidance information, second guidance information, and combined guidance information.

In all embodiments, the text generation model is configured to perform at least one of expansion or modification on the inputted basic information according to the preset rule, and output corresponding guidance information, so that the outputted guidance information includes richer descriptive information than the inputted basic information. Exemplarily, in a case that the third guidance information, the fourth guidance information, and the like are further used, third basic information, fourth basic information, or the like may be obtained in a similar manner, and the corresponding third guidance information, fourth guidance information, or the like is obtained through the text generation model. In this embodiment, the "richer descriptive information" may include at least one of the following two items: descriptive information that does not exist originally is added based on the basic information, and an expression manner of the basic information is expanded, so that the same sentence may be expressed in different manners.

Exemplarily, the above first basic information, second basic information, and combined basic information may be obtained through an input interface or from an internal or external storage apparatus. For example, an operator may provide the basic information through an input interface such as a keyboard or a microphone, or the basic information may be pre-written into a file and stored in the internal or external storage apparatus, so that the corresponding basic information may be obtained by reading and parsing the file. Exemplarily, in the foregoing embodiment, various trained text generation models may be adopted. Exemplarily, a ChatGPT model or a similar model may be used as the foregoing text generation model. The corresponding guidance information is obtained by performing expansion, rewriting, or the like on the basic information through the text generation model, which may further improve obtaining efficiency of the guidance information and reduce costs. Specifically, the operator only needs to provide brief basic descriptive information, without needing to spend more time in describing many details, may quickly complete tasks such as expansion and modification by virtue of the text generation model, and may obtain guidance information of many versions in a short time based on a set of basic information. This not only helps improve efficiency, but also helps improve model generalization performance.

Exemplarily, in all embodiments, to obtain guidance information that meets the needs, a description rule may be preset for the first guidance information, the second guidance information, and the combined guidance information. For example, one or more of the following description rules may be set. (1) A basic description of a to-be-generated image may be provided, to ensure that the generated guidance information includes descriptive information of at least one expected label (an expected to-be-annotated object) in the to-be-generated image. (2) A spatial relationship is not considered for the generated first guidance information and second guidance information, for example, a description of a spatial relationship between image features (objects) in the to-be-generated image is not considered. (3) The generated combined guidance information needs to include a spatial relationship, for example, including a description of a spatial relationship between image features (objects) in the to-be-generated image. (4) Guidance information is generated in one sentence as much as possible, with no more than two sentences at most. (5) Corresponding data augmentation is to be performed on each piece of generated guidance information, specifically including: generating a sentence having a similar expression to an existing sentence, and changing an expression of a positional relationship between expected labels included in the to-be-generated image. For example, an original expression is "A knife is on a fork", and the expression may be augmented as "The fork is under the knife". By presetting the description rule, a text generation model such as the ChatGPT model may be better utilized to obtain expected guidance information. More specifically, the guidance information may have the basic description of the to-be-generated image, and it is ensured that the descriptive information of the expected label in the to-be-generated image exists, so that it may be ensured that a subsequently generated image may correspond to such an expected label (including an object corresponding to the expected label), and may be directly used for a model training task. For example, for an image classification model, an expected label is used as an expected category of an image. In addition, through augmentation of description requirements, it may be ensured that a finally determined image generation model has sufficient robustness, and images generated through the image generation model are sufficiently generalized, so as to provide more diversified generated images. The foregoing description rules are merely examples, and different description rules may be designed based on an actual application requirement.

To further facilitate understanding the embodiments, a set of example basic information is provided by using the image shown in FIG. 3 as an example. As shown in FIG. 3, the image includes a knife, a fork, and a lot of food such as radishes, fish, green vegetables, and steamed buns. It is assumed that for a certain service, a key object of interest is an object such as a knife or a fork. To be specific, a label may be a knife or a fork, and an association effect brought by the food is not to be ignored. Therefore, first guidance information c0, second guidance information c1 that integrates background information such as food, and combined guidance information c0+c1 including combined information of c0 and c1 and additional information need to be described for the knife and the fork. In the example or another similar case, the first guidance information may also be referred to as basic condition guidance information, and the second guidance information may also be referred to as key detail condition guidance information. For example, first basic information for c0 may be provided as: describing an image including both a knife and a fork. Second basic information for c1 may be provided as: describing an image including many objects such as radishes, fish, green vegetables, steamed buns, and a dinner plate. The combined basic information for c0+c1 may be provided as: adding many objects such as radishes, fish, green vegetables, steamed buns, and a dinner plate in a targeted manner based on c0, with a knife and a fork scattered on the dinner plate. The first basic information, the second basic information, and the combined basic information may be inputted into the text generation model such as the ChatGPT model. The model may expand the basic information, for example, may further add descriptions about colors and materials of the knife and the fork, descriptions about colors and sizes of the radish and the fish, and a description about an image style, or may rewrite the basic information, for example, may change an expression manner and a description order of some expressions.

Exemplarily, the text generation model such as the ChatGPT model described above may be obtained through the exemplary training process 400 shown in FIG. 4. As shown in FIG. 4, the training process 400 may be divided into three stages. In a first stage, a supervised strategy model may be trained. Specifically, a problem data set may be collected, a problem is randomly extracted from the problem data set, an expected answer is given by an annotation person, and then the model is trained or fine-tuned through the annotated data. In a second stage, a reward model may be trained. Specifically, a problem may be randomly extracted from the data set, a plurality of different answers are generated for each problem through the model obtained in the first stage, and the annotation person ranks the different answers and trains the reward model through a ranking result. In a third stage, a strategy may be optimized through reinforcement learning. Specifically, a problem may be randomly extracted from the data set, an answer given by the model obtained in the first stage is scored through the reward model obtained in the second stage, and a model parameter is further updated through reinforcement learning based on a reward score. The foregoing process may be performed iteratively until the text generation model having expected quality is obtained.

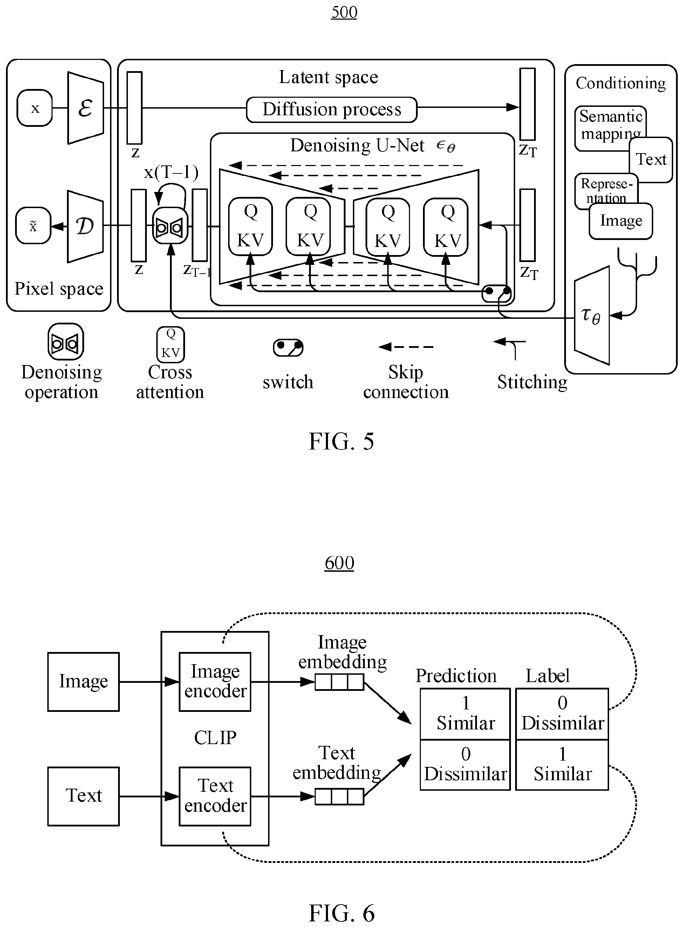

In some embodiments, the noise prediction model and the determined image generation model may be a model implementing an image generation process through a combination of a noise prediction process and a denoising process, for example, the SD model mentioned above. Exemplarily, FIG. 5 schematically shows an exemplary model structure of a noise prediction model 500 according to some embodiments of the present disclosure. A pre-selected model and a determined image generation model may also have the same structure as the noise prediction model. As shown in the figure, the model 500 may include an encoder ε, a decoder D, a diffusion process, a denoising process, or the like.

Specifically, the encoder ε may be configured to encode inputted image data x from a pixel space to a latent space, to obtain *z*=*ε*(*x*). This may be implemented, for example, through downsampling in a U-Net. The decoder D may be configured to decode denoised image data z from the latent space to the pixel space, to obtain *x̃*=*D*(*z*)=*D*(*ε*(*x*)). This may be implemented, for example, through upsampling in the U-Net.

Both the diffusion process and the denoising process may be completed in the latent space, and the latent space may characterize high-dimensional information of an image. Diffusion and denoising are performed in the latent space, which helps achieve higher processing efficiency. In addition, the model 500 further includes a conditioning module, which may process data such as texts, semantic maps, representations, and images, so that the model may generate a corresponding image based on information included in the data. For example, a text may be converted into a corresponding embedding vector through a text-to-image conversion model such as contrastive language-image pre-training (CLIP).

FIG. 6 schematically shows an exemplary training architecture of a text-to-image conversion model 600 according to some embodiments of the present disclosure. As shown in the figure, the model 600 may include an image encoder and a text encoder. Exemplarily, the model 600 may be trained through the process shown in the figure. First, an image and a section of texts are randomly extracted from a training set. The texts and the image may not necessarily match. A task of the model 600 is to predict whether the image and the texts match, so as to start training. After the texts and the image are randomly extracted, the image and the texts may be compressed into two embedding vectors respectively through the image encoder and the text encoder, which are referred to as an image embedding vector and a text embedding vector. Next, a similarity between the image embedding vector and the text embedding vector may be compared through a similarity measure such as a cosine similarity, to predict whether the extracted texts match the image. Subsequently, parameters of the two encoders may be updated reversely depending on whether a prediction result and a label are the same. The foregoing back propagation process is repeated, so that a pair of trained encoders may be obtained. For the texts and the image that match, similar embedding vectors may be outputted by the two encoders, and a similarity result close to 1 is obtained. For the texts and the image that do not match, completely different embedding vectors may be outputted by the two encoders, and a similarity result close to 0 is obtained. Therefore, two pieces of irrelevant information, texts for natural language and an image for computer vision, can be associated with each other and have a unified mathematical representation, so that mutual conversion between the two pieces of information may be achieved.

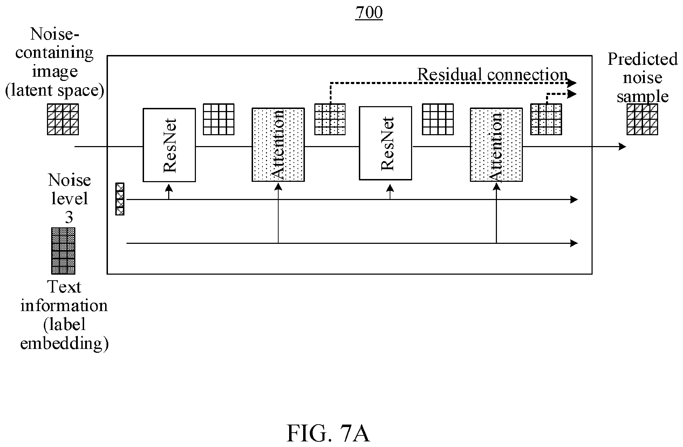

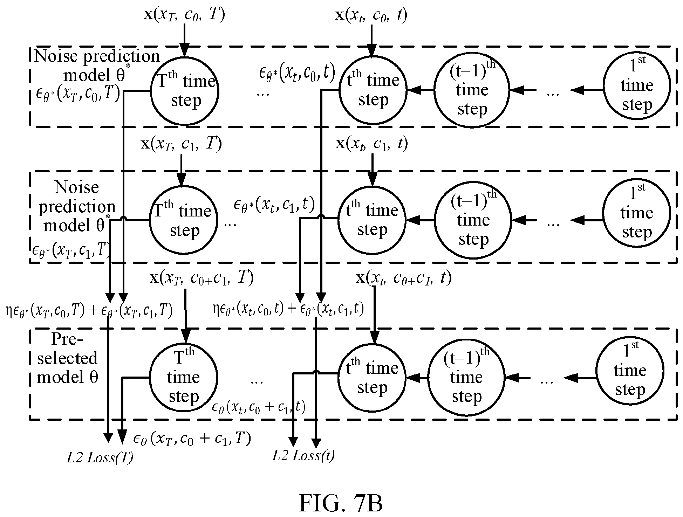

One or more features may be exacted separately or in combination from the following description for FIG.7A and FIG.7B to specify a particular feature in the foregoing embodiments. FIG. 7A schematically shows an example of a diffusion process 700 according to some embodiments of the present disclosure. Exemplarily, a model diffusion process may be controlling different noise levels (noise amounts) at different moments t (or a t^{th} time step), thereby obtaining different noise-containing images. The model obtains a predicted noise feature, namely, a predicted noise sample through a conditional U-Net model. Then, a difference between the inputted noise-containing image and the predicted noise feature may be calculated, to obtain an image after denoising in a t^{th} step. Based on the foregoing method embodiment, for example, after the first noise feature is identified from the first noise-containing image, the identified first noise feature may be removed from the first noise-containing image, to obtain a denoised image including the first image feature. After the second noise feature is identified from the second noise-containing image, the identified second noise feature may be removed from the second noise-containing image, to obtain a denoised image including the second image feature. After the third noise feature is identified from the third noise-containing image, the identified third noise feature may be removed from the third noise-containing image, to obtain a denoised image including the third image feature.

Exemplarily, a process of predicting a required image from an initialization noise may be achieved through a plurality of rounds of denoising processes. In such a process, t may characterize a quantity of denoising rounds or time steps, and noise levels corresponding to different denoising time steps may be different. For example, assuming that a noise level of the initialization noise is 100% (e.g., all pixels in the noise-containing image are noise pixel), and a noise level of a final required image is 0, noise levels corresponding to intermediate time steps may be evenly distributed, or distributed in other forms.

More specifically, for a section of texts, for example, the guidance information (which may be the first guidance information, the second guidance information, and the combined guidance information) mentioned above, may be compressed into an embedding vector through the text encoder shown in FIG. 6. In the denoising process of the U-Net model of the noise prediction model or the pre-selected model, the embedding vector may be injected into the denoising process through an attention mechanism (i.e., an attention module shown in the figure). For example, each ResNet in the U-Net module is no longer directly connected to an adjacent ResNet, but an attention module is added therebetween. Through the attention mechanism, the embedding vector obtained based on guidance information may be processed, so that semantic information of the embedding vector may be continuously injected. Therefore, the predicted noise feature and the denoised image are associated with semantics of the guidance information.

In the foregoing embodiments in which the image generation process is implemented through a combination of the noise prediction process and the denoising process, a process of determining the image generation model may be implemented through the noise prediction.

In some embodiments, operation 220 may include: inputting the first guidance information together with noise-containing image data into a noise prediction model, and obtaining a first noise prediction of the noise-containing image as a first noise feature based on the noise prediction model. The noise-containing image data represents data of an image having noise (the image may be an image of what is described by the first guidance information in case of operation 220, or by the second guidance information in case of operation 230, or by the combined guidance information in case of operation 240, or a combination thereof). Operation 230 may include: inputting the second guidance information together with the noise-containing image data into the noise prediction model, and obtaining a second noise prediction of the noise-containing image as a second noise feature based on the noise prediction model. Operation 240 may include: inputting the combined guidance information together with the noise-containing image data into a pre-selected model, and obtaining a third noise prediction of the noise-containing image as a third noise feature based on the pre-selected model. Each of the above respective detailed descriptions of the operations 220, 230, and 240 may be taken in isolation to specify a corresponding one of the operations 220, 230, and 240 in Fig.2A. Further, one or more features may be taken in isolation or generalized from the above descriptions to specify a particular feature in the operations 220, 230, and 240 in Fig.2A or in other parts of the present disclosure

In some embodiments, operation 220 may include: inputting the first guidance information and at least one first noise-containing image in at least one time step of the noise prediction model, to predict at least one first noise feature of the at least one first noise-containing image based on semantics of the first guidance information, the at least one first noise-containing image including the first noise-containing image, and the at least one first noise feature including the first noise feature. Operation 230 may include: inputting the second guidance information and at least one second noise-containing image in the at least one time step of the noise prediction model, to predict at least one second noise feature of the at least one second noise-containing image based on semantics of the second guidance information, the at least one second noise-containing image including the second noise-containing image, and the at least one second noise feature including the second noise feature. Operation 240 may include: inputting the combined guidance information and at least one third noise-containing image in at least one time step of the pre-selected model, to predict at least one third noise feature of the at least one third noise-containing image based on semantics of the combined guidance information, the at least one third noise-containing image including the third noise-containing image, and the at least one third noise feature including the third noise feature. The first noise-containing image and the second noise-containing image are inputted in a t^{th} time step of the at least one time step of the noise prediction model. The third noise-containing image is inputted in a t^{th} time step of the at least one time step of the pre-selected model. Each of the above respective detailed descriptions of the operations 220, 230, and 240 may be taken in isolation to specify a corresponding one of the operations 220, 230, and 240 in Fig.2A. Further, one or more features may be taken in isolation or generalized from the above descriptions to specify a particular feature in the operations 220, 230, and 240 in Fig.2A or in other parts of the present disclosure.

For each feature and/or operation of the foregoing process separately or in combination, reference may be made to an example of a noise prediction process according to some embodiments of the present disclosure shown in FIG. 7B.

As shown in FIG. 7B, the noise prediction model being a noise prediction model θ^{*} and the pre-selected model being a pre-selected model θ, both including T time steps. The first guidance information and the at least one first noise-containing image are inputted respectively in a 1^{st} time step to a T^{th} time step of the noise prediction model θ^{*}, to predict the at least one first noise feature of the at least one first noise-containing image based on semantics of the first guidance information. A t^{th} time step and the T^{th} time step are used as an example. In the t^{th} time step, a vector *x*(*xₜ*, *c*₀, *t*) of a time step t, first guidance information c₀, and a first noise-containing image *xₜ* is inputted, to predict a first noise feature *ε_{θ*}*(*xₜ*, *c*₀, *t*) of the first noise-containing image *xₜ* based on the semantics of the first guidance information c₀. In the T^{th} time step of the noise prediction model θ^{*}, a vector *x*(*x_{T}, c*₀, *T*) of a time step T, the first guidance information c₀, and a first noise-containing image *x_{T}* is inputted, to predict a first noise feature *ε_{θ*}*(*x_{T}, c*₀, *T*) of the first noise-containing image *x_{T}* based on the semantics of the first guidance information c₀. In addition, the second guidance information and the at least one second noise-containing image are inputted respectively in the 1^{st} time step to the T^{th} time step of the noise prediction model θ^{*}, to predict the at least one second noise feature of the at least one second noise-containing image based on semantics of the second guidance information. The t^{th} time step and the T^{th} time step are used as an example. In the t^{th} time step, a vector x(*xₜ*, *c*₁, *t*) of a time step t, second guidance information c₁, and a second noise-containing image *xₜ* is inputted, to predict a second noise feature *ε_{θ*}*(*xₜ*, *c*₁, *t*) of the second noise-containing image *xₜ* based on semantics of the second guidance information c₁. In the T^{th} time step of the noise prediction model θ^{*}, a vector x(*x_{T}*, *c*₁, *T*) of a time step T, the second guidance information c₁, and a second noise-containing image *x_{T}* is inputted, to predict a second noise feature *ε_{θ*}*(*x_{T}*, *c*₁, *T*) of the second noise-containing image *x_{T}* based on the semantics of the second guidance information c₁.

In addition to this, combined guidance information and at least one third noise-containing image are inputted respectively in the 1^{st} time step to the T^{th} time step of the pre-selected model θ, to predict at least one third noise feature of the at least one third noise-containing image based on semantics of the combined guidance information. The t^{th} time step and the T^{th} time step are used as an example. In the t^{th} time step, a vector x(*xₜ*, *c*₀₊*c*₁, *t*) of a time step t, combined guidance information c₀+c₁, and a third noise-containing image *xₜ* is inputted, to predict a third noise feature *ε_{θ}*(*xₜ*, *c*₀ + *c*₁, *t*) of the third noise-containing image *xₜ* based on semantics of the combined guidance information c₀+c₁. In the T^{th} time step of the pre-selected model θ_{*}, a vector x(*x_{T}*, *c*₀₊*c*₁, *T*) of a time step T, the combined guidance information c₀+c₁, and a third noise-containing image *x_{T}* is inputted, to predict a third noise feature *ε_{θ}*(*x_{T}*, *c*₀ + *c*₁, *T*) of the third noise-containing image *x_{T}* based on the semantics of the combined guidance information c₀+c₁.

In the foregoing example, although the first noise-containing image, the second noise-containing image, and the third noise-containing image used in the t^{th} time step of the noise prediction model θ^{*} and in the t^{th} time step of the pre-selected model θ are all *xₜ*, different noise-containing images may also be used in other examples. Although the first noise-containing image, the second noise-containing image, and the third noise-containing image used in the T^{th} time step of the noise prediction model θ^{*} and in the T^{th} time step of the pre-selected model θ are all *x_{T}*, different noise-containing images may also be used in other examples.

As mentioned above, the first guidance information, the second guidance information, and the combined guidance information may be provided by a person, a model, or a combination thereof according to a preset rule.

Exemplarily, the noise-containing image data in some embodiments may include first data and second data. The first data may be configured for characterizing pixel data of the noise-containing image, and the second data may be configured for characterizing a noise level of the noise-containing image. As mentioned above, in some embodiments, image generation of the noise prediction model and the determined image generation model may be implemented through iteration of a plurality of rounds of noise prediction and denoising processes. In such embodiments, the noise-containing image data may be divided into two parts. One part is image data configured for characterizing an image including noise, and the other part is noise level data, which may also be referred to as time step data, or the like.

Exemplarily, the foregoing noise-containing image in some embodiments may be obtained in the following manner: obtaining a basic image, the basic image being configured to characterize an image of what is described by the first guidance information, the second guidance information, and the combined guidance information; and adding a noise of a preset level to the basic image, to obtain a noise-containing image.

Exemplarily, in some embodiments, a first basic image may be obtained, and the at least one first noise-containing image is obtained by adding at least one noise of a preset level to the first basic image, the first basic image including the first image feature. A second basic image is obtained, and the at least one second noise-containing image is obtained by adding the at least one noise of a preset level to the second basic image, the second basic image including the second image feature. A third basic image is obtained, and the at least one third noise-containing image is obtained by adding the at least one noise of a preset level to the third basic image, the third basic image including the first image feature and the second image feature. Each of the descriptions regarding processing the first basic image, the second basic image, and the third basic image in this part may be used to further specify, replace, or combine with other descriptions for these basic images in other parts of the present disclosure.

Exemplarily, the first noise-containing image inputted in one time step of at least one time step of the noise prediction model is obtained by adding a noise of a preset level based on the first noise-containing image inputted in a time step before the time step. The second noise-containing image inputted in the time step of the noise prediction model is obtained by adding the noise of the preset level based on the second noise-containing image inputted in the time step before the time step. The third noise-containing image inputted in the time step of the pre-selected model is obtained by adding the noise of the preset level based on the third noise-containing image inputted in the time step before the time step.

Exemplarily, the example mentioned above is still used as an example. For any one of the first basic image, the second basic image, and the third basic image, assuming that a noise level of an initialization noise (random noise) is 100%, a noise level of a final required image is 0 (i.e., noiseless), and assuming that denoising is performed through 50 steps in total, for a time step t=1, a noise (for example, a random noise) of 100% may be added to the basic image to obtain a noise-containing image with all pixels in it being noise; for a time step t = 2, a noise of 98% may be added to the basic image to obtain a noise-containing image with 98% of the pixels in it being noise; for a time step t = 3, a noise of 96% may be added to the basic image to obtain a noise-containing image with 96% of the pixels in it being noise; and so on. Alternatively, the noise level corresponding to each time step may also be determined in another manner. Therefore, images having various different levels of noise may be flexibly obtained to optimize the pre-selected model. In addition, exemplarily, the foregoing noise-containing image may also be obtained in another manner. For example, an image that contains noise is selected as the noise-containing image, and an image processed by the noise prediction model for several steps is used as the noise-containing image. The random noise may be Gaussian noise.

In some embodiments, the first guidance information may be configured for describing a key feature in the image, and the second guidance information may be at least configured for describing another non-key feature in the same image. In this embodiment, operation 250 may include: determining the combined noise feature based on a weighted sum of the first noise feature and the second noise feature, a weight of the first noise feature being greater than a weight of the second noise feature. In this embodiment, the key feature may be understood as a feature related to an image label. For example, in the image shown in FIG. 3, according to the descriptions of the foregoing examples, the expected label of the image may be a knife and a fork. The first guidance information may be configured for describing the knife and the fork, and the second guidance information may be configured for describing a radish, fish, green vegetables, steamed buns, a dinner plate, or the like. The weight of the first noise feature is set to be greater than the weight of the second noise feature in the combined noise feature, and then a model parameter of the pre-selected model is updated based on a difference between the combined noise feature and the third noise feature, which may increase a proportion of the first guidance information in global information, so that the trained pre-selected model (i.e., the determined image generation model) may not ignore detail information, and particularly not ignore expected key information while describing the global information involved in the combined guidance information. Therefore, the image generated based on the combined guidance information may correspond to the expected label, and may be directly configured to train a related image processing model. This helps greatly improve image generation efficiency and improve pertinence of the generated image, and helps improve the training efficiency and effect of the related image processing model.

In some embodiments, operation 260 may include: determining a combined prediction loss based on the combined noise feature and the third noise feature; and adjusting the model parameter of the pre-selected model based on the combined prediction loss, to reduce the combined prediction loss. Exemplarily, the combined prediction loss may be determined through a loss function such as an L2 loss, to reflect a difference between the combined noise feature and the third noise feature more accurately, and update the model parameter of the pre-selected model more efficiently.

In some embodiments, an initial model parameter of the pre-selected model may be the same as a model parameter of the noise prediction model. As mentioned above, the noise prediction model and the pre-selected model may have the same model structure. To be specific, the noise prediction model and the pre-selected model belong to the same type of model. Exemplarily, the initial model parameter of the pre-selected model may be set arbitrarily. However, to save training costs, the initial model parameter of the pre-selected model may be set to be consistent with the model parameter of the noise prediction model. To be specific, an initial pre-selected model may be completely consistent with the noise prediction model. Since the noise prediction model is a trained model that may generate an output image based on an input text, but an image generated by the noise prediction model cannot achieve an expected effect, optimization training is performed based on the noise prediction model to save time, and an image generation model that meets an expectation may be easily obtained. Exemplarily, the noise prediction model and the initial pre-selected model may be the same SD model (for example, an SD V2.0 model). Exemplarily, an image generation model determined after fine adjustment is performed based on the SD model may be referred to as an add stable diffusion (ASD) model.

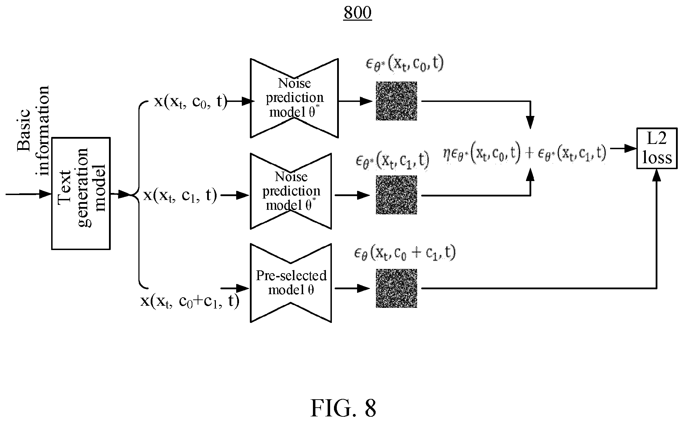

To further facilitate understanding of the respective features in the foregoing various embodiments, FIG. 8 schematically shows an exemplary training architecture 800 for determining an image generation model according to some embodiments of the present disclosure. One or more features may be exacted separately or in combination from the following description for FIG.8 to specify a particular feature in the foregoing embodiments. As described in the foregoing embodiments, a basic description (for example, the first basic information, the second basic information, and the combined basic information) may be inputted into a text generation model such as the ChatGPT model, to obtain the corresponding guidance information (for example, the first guidance information c₀, the second guidance information c₁, and the combined guidance information c₀+c₁). The obtained guidance information may be provided together with the noise-containing image xₜ to the noise prediction model or the pre-selected model, for example, the model shown in FIG. 5, to obtain a corresponding noise prediction. The noise-containing image is provided to the noise prediction model or the pre-selected model in the form of a tensor. Then, the model parameter of the pre-selected model may be updated by causing the predicted noise obtained by the first guidance information c₀ and the second guidance information c₁ through an original diffusion process of the noise prediction model and the predicted noise obtained by the combined guidance information c₀+c₁ through a diffusion process of the pre-selected model to be consistent.

Specifically, as shown in FIG. 8, a vector x(xₜ, c₀, t) representing first guidance information c₀, a first noise-containing image *xₜ*, and a time step t and a vector x(*xₜ*, *c*₁, *t*) representing second guidance information c₁, a second noise-containing image *xₜ*, and the time step t may be inputted into the noise prediction model θ*, to obtain high-dimensional noise *ε_{θ*}*(*xₜ*, *c*₀, *t)* and *ε_{θ*}*(*xₜ, c*₁, *t)* corresponding to a t^{th} step as a first noise feature and a second noise feature. Subsequently, a combined noise η*ε_{θ*}*(*xₜ*, *c*₀, *t) + ε*_{*θ**}(*xₜ, c*₁, *t)* may be obtained as a combined noise feature based on *ε*_{*θ**}(*xₜ*, *c*₀, *t)* and *ε*_{*θ**}(*xₜ*, *c*₁, *t),* where a weight η may be regarded as a condition factor, which may characterize a proportion of c₀ in the combined noise, and further characterize a proportion of c₀ in the process of guiding image generation. Exemplarily, if c₀ is a description involving a knife and a fork, and the knife and the fork is main label information, i.e., key information of interest, a weight of c₀ may be greater than that of c₁. For example, η may be set to 1.5, or may be set to another value greater than 1. For the combined guidance information c₀+c₁, the vector x(*xₜ*, *c*₀+*c*₁, *t*) representing the combined guidance information, the third noise-containing image *xₜ*, and the time step t may be inputted into the pre-selected model θ, to obtain the same high-dimensional noise *ε_{θ}*(*xₜ*, *c*₀ + *c*₁, *t*) corresponding to the t^{th} step as the third noise feature. The pre-selected model θ may have the same model structure as the noise prediction model θ*, and an initial parameter thereof may be the same as that of the noise prediction model θ*, so as to increase a training speed. Exemplarily, the noise prediction model θ^{*} and the initial pre-selected model θ may be the foregoing SD V2.0 model. Further, the prediction loss such as an L2 loss (see L2 Loss (t) in FIG. 7B) may be determined based on *ε_{θ}*(*xₜ*, *c*₀ + *c*₁, *t*) and η*ε*_{*θ**}(*xₜ*, *c*₀, *t*) *+ ε*_{*θ**}(*xₜ*, *c*₁, *t*), and one or more model parameters of the pre-selected model θ are updated based on the loss, so as to minimize the loss. In other words, through the training process, the third noise prediction obtained based on the combined guidance information tends to be consistent with the combined noise prediction obtained based on the first guidance information and the second guidance information, thereby ensuring that the determined image generation model may not ignore local information while depicting global information, and exemplarily emphasizes more critical local information. In the foregoing example, in the t^{th} time step, the first noise-containing image, the second noise-containing image, and the third noise-containing image are all *xₜ*, i.e., the same noise-containing image. In another example, the first noise-containing image, the second noise-containing image, and the third noise-containing image may be different noise-containing images. The first noise-containing image includes the first image feature, the second noise-containing image includes the second image feature, and the third noise-containing image include the first image feature and the second image feature.

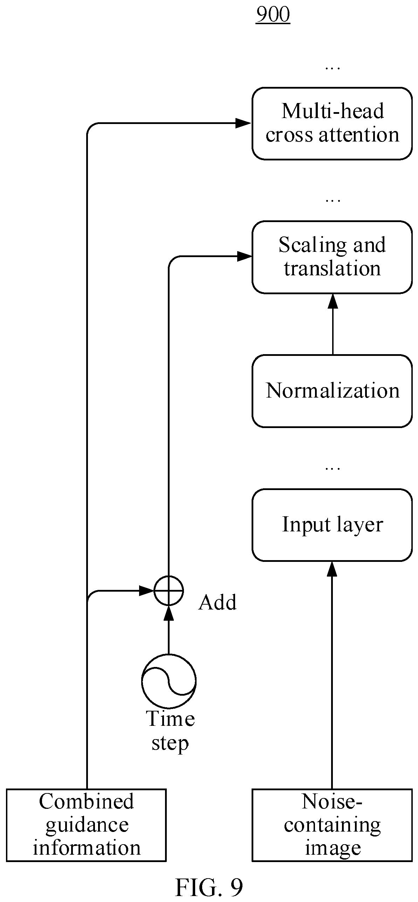

Further specifically, the combined guidance information and the noise-containing image data may be inputted into a U-Net model as shown in FIG. 9. The U-Net model may be included in a denoising U-Net module in the model 500 shown in the figure. Exemplarily, the foregoing combined guidance information c₀+c₁ may be encoded into a text embedding vector through a trained text encoder as shown in FIG. 6. The text embedding vector may be provided to each time step as a global condition, and is introduced through an attention mechanism. First data (i.e., data characterizing pixel data of the noise-containing image) in the noise-containing image data may be provided to an input layer, and gradually subjected to normalization, scaling, and translation step by step, and is fused with the foregoing text embedding vector through the attention mechanism. Second data (i.e., data characterizing a noise level of the noise-containing image) in the noise-containing image data may be incorporated into a processing process as shown in the figure.

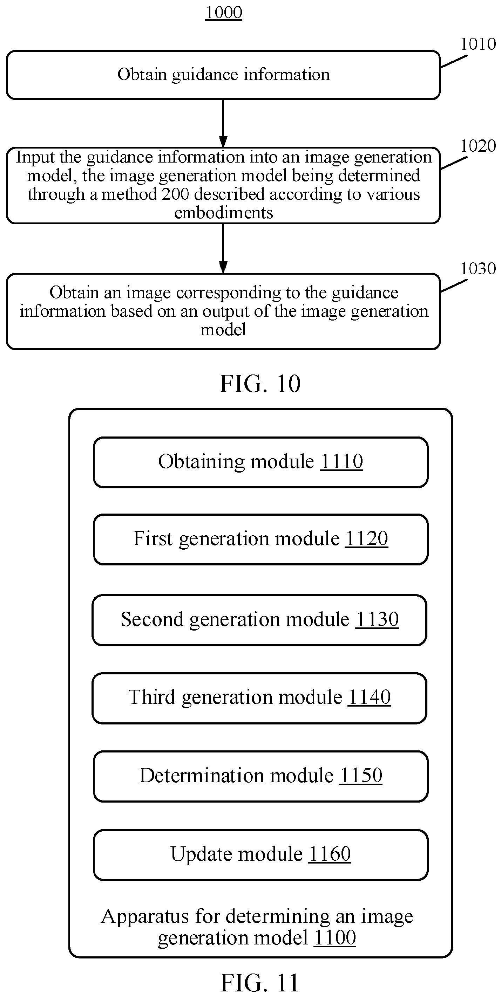

FIG. 10 schematically shows an exemplary flowchart of an image generation method 1000 according to some embodiments of the present disclosure. Exemplarily, the method 1000 may be applied to the scenario 100 shown in FIG. 1, for example, may be deployed on the server 110, the terminal device 120, or a combination thereof in a form such as an application. As shown in the figure, the method 1000 may include operation 1010 to operation 1030, which are specifically as follows.

In operation 1010, guidance information may be obtained. Exemplarily, the guidance information may be derived from manually input, automatic generation through an algorithm or a model, or a combination thereof. This may be the same as the manner of obtaining the guidance information described above with respect to the various embodiments describing the method 200.

In operation 1020, the guidance information may be inputted into an image generation model, the image generation model being determined through the method 200 described according to the foregoing various embodiments.

In operation 1030, an image corresponding to the guidance information may be obtained based on an output of the image generation model.

Based on the guidance information in a form of combined guidance information, an image including global information and all local information may be generated through the image generation model determined according to the method 200. Alternatively, the generated image may not only include an object described by the local information, but also include richer additional information. This image may correspond to one or more specific labels (the one or more specific labels may be included in the provided guidance information), and has image quality that meets a requirement. In addition, since the image is directly generated based on texts through a model, privacy or sensitive information is not involved. In addition, when the determined image generation model is used, guidance information (i.e., the foregoing combined guidance information) only needs to be provided according to a preset rule. This has a relatively low requirement for professional skills of operators, and a large number of images having required labels can be generated in a short time. Therefore, in an actual service scenario, through the foregoing solution, a relatively large amount of data that is beneficial to service training may be generated, thereby ensuring that iterative optimization may be rapidly performed on the service. In addition, a large amount of data is generated in a short time, and current identification capabilities of some models for service images may also be improved through an increase of a data volume, thereby helping ensure a usage effect of an online service.

In some embodiments, operation 1010 may include: obtaining basic information; and inputting the basic information into a text generation model, and obtaining guidance information based on an output of the text generation model, the text generation model being configured to perform at least one of expansion or modification on the inputted basic information according to a preset rule, and output corresponding guidance information, so that the outputted guidance information includes richer descriptive information than the inputted basic information. The text generation model and a process of obtaining the guidance information through the text generation model have been described in the foregoing embodiments of operation 210 of the method 200, and details are not described herein again.

As mentioned above, in some embodiments, the foregoing text generation model may be implemented through a ChatGPT model or a similar model. The image generation model may be obtained by performing optimization training based on an SD model or a similar model. Regarding the ChatGPT and SD, the former belongs to the field of NLP, and the latter belongs to the field of CV, both of which are products of big data and large model training, and have attracted wide attention from academia and industry for their excellent performance. However, currently, no related technology to unify the fields and capabilities of NLP and CV is provided temporarily, and no related technology for enabling NLP and CV to be implemented in an actual service and produce performance effects is provided temporarily. However, through the technical solutions provided in the present disclosure, fields and capabilities of NLP and CV may be fused, to resolve a problem of fusion of NLP and CV at a data level (for example, text data involved in the ChatGPT and image data involved in the SD), thereby ensuring that NLP and CV have relatively good effects of depicting key information in global information, and can give full play to excellent performance of big data and large scale in an actual service (for example, content review), and better boosting development of the actual service.

FIG. 11 schematically shows an exemplary block diagram of an apparatus 1100 for determining an image generation model according to some embodiments of the present disclosure. As shown in the figure, the apparatus 1100 may include an obtaining module 1110, a first generation module 1120, a second generation module 1130, a third generation module 1140, a determination module 1150, and an update module 1160.

According to an embodiment, the obtaining module 1110 may be configured to obtain first guidance information and second guidance information. The first guidance information is configured for characterizing a first image feature, and the second guidance information is configured for characterizing a second image feature. The first guidance information, the second guidance information, and combined guidance information may be different descriptive information for the same image, and the combined guidance information includes combined information of the first guidance information and the second guidance information, and additional information.

The first generation module 1120 may be configured to input the first guidance information and a first noise-containing image into a noise prediction model, to identify a first noise feature from the first noise-containing image. The first noise-containing image includes the first image feature, and the noise prediction model is a pre-trained model with at least some model parameters being frozen. The first generation module 1120 generates the first noise feature through the noise prediction model based on the first guidance information. The noise prediction model is configured to output an image based on the inputted guidance information, so that the outputted image includes an image feature as described by the inputted guidance information.

The second generation module 1130 may be configured to input the second guidance information and a second noise-containing image into the noise prediction model, to identify a second noise feature from the second noise-containing image. The second noise-containing image includes the second image feature. The second generation module 1130 generates the second noise feature through the noise prediction model based on the second guidance information.

The third generation module 1140 may be configured to input combined guidance information and a third noise-containing image into a pre-selected model having a same model structure as the noise prediction model, to identify a third noise feature from the third noise-containing image, the combined guidance information including the first guidance information and the second guidance information. The third noise-containing image includes the first image feature and the second image feature.

The determination module 1150 may be configured to combine the first noise feature and the second noise feature to obtain a combined noise feature.

The update module 1160 may be configured to adjust a model parameter of the pre-selected model based on a difference between the combined noise feature and the third noise feature, to update the pre-selected model.

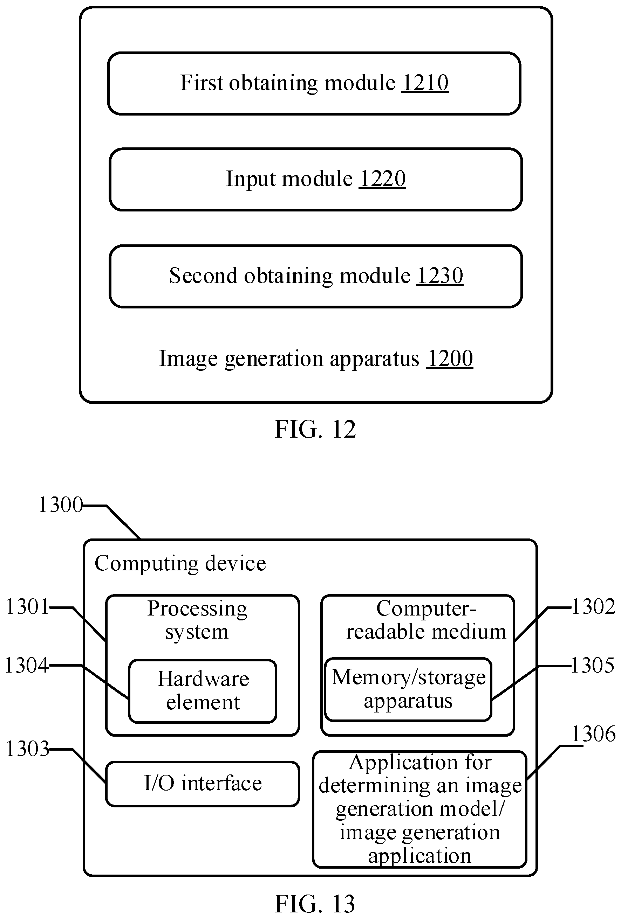

FIG. 12 schematically shows an exemplary block diagram of an image generation apparatus 1200 according to some embodiments of the present disclosure. As shown in the figure, the apparatus 1200 may include a first obtaining module 1210, an input module 1220, and a second obtaining module 1230.

Specifically, the first obtaining module 1210 may be configured to obtain guidance information. The input module 1220 may be configured to input the guidance information into an image generation model, the image generation model being determined through the method 200 described according to the foregoing various embodiments. The second obtaining module 1230 may be configured to obtain an image corresponding to the guidance information based on an output of the image generation model.

The apparatus 1100 and the apparatus 1200 may be implemented by software, hardware, or a combination of software and hardware. A plurality of different modules may be implemented in the same software or hardware structure, or one module may be implemented by a plurality of different software or hardware structures.

In addition, the apparatus 1100 may be configured to implement the method 200 described above, and the apparatus 1200 may be configured to implement the method 1000 described in the foregoing embodiments. The related details have been described in detail in the foregoing description. For brevity, the details are not described herein again. The apparatus 1100 and the apparatus 1200 may have the same features and advantages as those described with respect to the foregoing method.

FIG. 13 schematically shows an exemplary block diagram of a computing device 1300 according to some embodiments of the present disclosure. For example, the computing device may represent the server 110 and the terminal device 120 in FIG. 1, or another type of computing device that may be configured to deploy the apparatus 1100 and the apparatus 1200 provided in the present disclosure.

As shown in the figure, the example computing device 1300 includes a processing system 1301, one or more computer-readable media 1302, and one or more input/output (I/O) interfaces 1303 communicatively coupled to each other. Although not shown, the computing device 1300 may further include a system bus or another data and command transmission system that couples various components to each other. The system bus may include any one or combination of different bus structures. The bus structure may be, for example, a memory bus or a memory controller, a peripheral bus, a universal serial bus, and/or a processor or a local bus using any one of various bus architectures, or may further include, for example, control and data lines.

The processing system 1301 is configured to perform one or more operations through hardware. Therefore, the processing system 1301 is shown as including a hardware element 1304 that may be configured as a processor, a functional block, or the like. The hardware element may include implementation in hardware as an application specific integrated circuit (ASIC) or another logic device formed by one or more semiconductors. The hardware element 1304 is not limited by a material from which the hardware element is formed or a processing mechanism adopted therein. For example, a processor may include (a plurality of) semiconductors and/or transistors (for example, an electronic integrated circuit (IC)). In such a context, a processor-executable instruction may be an electronically executable instruction.

The computer-readable medium 1302 is shown as including a memory/storage apparatus 1305. The memory/storage apparatus 1305 represents a memory/storage apparatus associated with one or more computer-readable media. The memory/storage apparatus 1305 may include a volatile storage medium (such as a random access memory (RAM)) and/or a non-volatile storage medium (such as a read-only memory (ROM), a flash memory, an optical disc, or a magnetic disk). The memory/storage apparatus 1305 may include a fixed medium (such as a RAM, a ROM, and a fixed hard disk drive) and a removable medium (such as a flash memory, a removable hard disk drive, or an optical disc). Exemplarily, the memory/storage apparatus 1305 may be configured to store various texts, images, parameters, and the like mentioned in the foregoing embodiments. The computer-readable medium 1302 may be configured in various other manners further described below.

The one or more I/O interfaces 1303 represent functions that allow a user to enter commands and information into the computing device 1300, and further allow information to be presented to the user and/or transmitted to other components or devices through various I/O devices. An example of the input device includes a keyboard, a cursor control device (for example, a mouse), a microphone (for example, configured for voice input), a scanner, a touch function (for example, a capacitive sensor or another sensor configured to detect physical touch), a camera (for example, a motion that does not involve touch may be detected as a gesture through a visible or invisible wavelength (such as an infrared frequency)), a network card, a receiver, or the like. An example of an output device includes a display device (for example, a display or a projector), a speaker, a printer, a tactile response device, a network card, a transmitter, or the like. Exemplarily, in the foregoing described embodiments, a user may be allowed through the input device to provide inputted basic information, or the like, and the user may be allowed through the output device to view a generated image, an updated model parameter, or the like.

The computing device 1300 further includes an application for determining an image generation model or an image generation application 1306. The application for determining an image generation model or the image generation application 1306 may be stored in the memory/storage apparatus 1305 as program computing instructions. The application for determining an image generation model or the image generation application 1306 may implement all functions of the modules of the apparatus 1100 or the apparatus 1200 described with respect to FIG. 11 or FIG. 12 together with the processing system 1301, or the like.

Various technologies may be described herein in the general context of software, hardware, elements, or program modules. Generally, the modules include a routine, a program, an object, an element, an assembly, a data structure, and the like that execute a specific task or implement a specific abstract data type. The terms "module", "function", or the like used herein generally refer to software, firmware, hardware, or a combination thereof. The features of the technologies described herein are platform-independent, which means that the technologies may be implemented on various computing platforms having various processors.

The implementation of the described modules and technologies may be stored on a form of computer-readable medium, or transmitted across the form of computer-readable medium. The computer-readable medium may include various media that may be accessed by the computing device 1300. As an example rather than a limitation, the computer-readable medium may include "a computer-readable storage medium" and "a computer-readable signal medium".

Contrary to simple signal transmission, a carrier wave, or a signal, the "computer-readable storage medium" refers to a medium and/or a device that can store information permanently, and/or a tangible storage apparatus. Therefore, the computer-readable storage medium refers to a non-signal bearing medium. The computer-readable storage medium includes hardware such as volatile and nonvolatile media, removable and non-removable media, and/or storage devices implemented through a method or technology applicable to storage of information (such as a computer-executable instruction, a data structure, a program module, a logic element/circuit or other data). An example of the computer-readable storage medium may include, but is not limited to, a RAM, a ROM, an electrically erasable programmable ROM (EEPROM), a flash memory or another memory technology, a CD-ROM, a digital versatile disk (DVD) or another optical storage apparatus, a hard disk, a cassette tape, a magnetic tape, a magnetic disk storage apparatus or another magnetic storage device, or another storage device, a tangible medium, or a product suitable for storing expected information and accessible by a computer.

The "computer-readable signal medium" refers to a signal bearing medium configured to transmit an instruction to hardware of the computing device 1300, for example, through a network. A signal medium may typically embody the computer-executable instruction, the data structure, the program module, or other data in a modulated data signal such as a carrier wave, a data signal, or another transmission mechanism. The signal medium further includes any information transmission medium. As an example rather than a limitation, a signal medium includes, for example, a wired network or a direct-connected wired medium, and a wireless medium such as an acoustic medium, an RF medium, an infrared medium, and another wireless medium.

As described above, the hardware element 1304 and the computer-readable medium 1302 represent instructions, modules, programmable device logic, and/or fixed device logic implemented in the form of hardware, which may be configured to implement at least some aspects of the technologies described herein in some embodiments. A hardware element may include an integrated circuit or a system on chip, the ASIC, a field programmable gate array (FPGA), a complex programmable logic device (CPLD), and another implementation in silicon or an assembly of another hardware device. In such a context, a hardware element may serve as a processing device for executing a program task defined by an instruction, a module, and/or a logic embodied by the hardware element, and a hardware device for storing an instruction for execution, for example, the computer-readable storage medium described previously.

The foregoing combination may also be configured for implementing various technologies and modules described herein. Therefore, the software, the hardware, or the program module, and another program module may be implemented as one or more instructions and/or logics on a form of computer-readable storage medium and/or embodied by one or more hardware elements 1304. The computing device 1300 may be configured to implement specific instructions and/or functions corresponding to software and/or hardware modules. Therefore, for example, through use of the computer-readable storage medium and/or the hardware element 1304 of the processing system, a module may be implemented at least partially in hardware as a module executable by the computing device 1300 as software. The instructions and/or functions may be executed/operated by one or more computing devices 1300 and/or processing systems 1301 to implement the technologies, modules, and examples described herein.

The technologies described herein may be supported by the various configurations of the computing device 1300, and are not limited to specific examples of the technologies described herein.

For the sake of clarity, the embodiments of the present disclosure are described based on different functional units. However, functionality of each functional unit may be implemented in a single unit, implemented in a plurality of units, or implemented as a part of another functional unit without departing from the present disclosure. For example, the functionality described as being performed by a single unit may be performed by a plurality of different units. Therefore, a reference to a specific functional unit is only regarded as a reference to an appropriate unit configured to provide the described functionality, rather than indicative of a strict logical or physical structure or organization. Therefore, the present disclosure may be implemented in a single unit, or may be physically and functionally distributed between different units and circuits.

The present disclosure provides a computer-readable storage medium, having a computer-executable instruction stored therein, the computer-executable instruction, when executed, implementing the foregoing method for determining an image generation model or the image generation method.

The present disclosure provides a computer program product or a computer program, the computer program product or the computer program including a computer-executable instruction, the computer-executable instruction being stored in a computer-readable storage medium. A processor of a computing device reads the computer-executable instruction from the computer-readable storage medium, the processor executing the computer-executable instruction, so that the computing device performs the method for determining an image generation model or the image generation method provided in the foregoing various embodiments.

By studying the accompanying drawings, the disclosed content, and the appended claims, a person skilled in the art can understand and implement variations to the disclosed embodiments when practicing the claimed subject matter. In the claims, the word "comprising" does not exclude another element or operation, and "a/an" or "one" does not exclude a case of plurality. The mere fact that some measures are recorded in mutually different dependent claims does not indicate that a combination of these measures cannot be used for advantage.

## Claims

1. A method (200) for determining an image generation model, **characterized by** comprising:
obtaining first guidance information characterizing a first image feature and second guidance information characterizing a second image feature (210);
inputting the first guidance information and a first noise-containing image into a noise prediction model, to identify a first noise feature from the first noise-containing image (220);
inputting the second guidance information and a second noise-containing image into the noise prediction model, to identify a second noise feature from the second noise-containing image (230);
inputting combined guidance information and a third noise-containing image into a pre-selected model having a same model structure as the noise prediction model, to identify a third noise feature from the third noise-containing image, the combined guidance information including the first guidance information and the second guidance information (240);
combining the first noise feature and the second noise feature to obtain a combined noise feature (250); and
adjusting a model parameter of the pre-selected model based on a difference between the combined noise feature and the third noise feature, to update the pre-selected model (260).

2. The method according to claim 1, wherein the first noise-containing image includes the first image feature, the second noise-containing image includes the second image feature, and the third noise-containing image includes the first image feature and the second image feature.

3. The method according to claim 1 or 2, wherein
inputting the first guidance information and the first noise-containing image into the noise prediction model, to identify the first noise feature (220) includes:
inputting the first guidance information and at least one of the first noise-containing image in at least one time step of the noise prediction model, to predict at least one of the first noise feature of the at least one first noise-containing image based on semantics of the first guidance information; and/or
inputting the second guidance information and the second noise-containing image into the noise prediction model, to identify the second noise feature (230) includes:
inputting the second guidance information and at least one of the second noise-containing image in the at least one time step of the noise prediction model, to predict at least one of the second noise feature of the at least one second noise-containing image based on semantics of the second guidance information; and/or
inputting the combined guidance information and the third noise-containing image into the pre-selected model, to identify the third noise feature (240) includes:
inputting the combined guidance information and at least one of the third noise-containing image in at least one time step of the pre-selected model, to predict at least one of the third noise feature of the at least one third noise-containing image based on semantics of the combined guidance information.

4. The method according to claim 3, wherein
the first noise-containing image and the second noise-containing image are inputted in a t^{th} time step of the at least one time step of the noise prediction model; and
the third noise-containing image is inputted in a t^{th} time step of the at least one time step of the pre-selected model.

5. The method according to any one of claims 1 to 4, wherein obtaining the first guidance information and the second guidance information (210) includes:
obtaining first basic information and second basic information; and
inputting the first basic information and the second basic information into a text generation model, so that the text generation model performs at least one of expansion or modification on each of the first basic information and the second basic information according to a preset rule, to generate the first guidance information and the second guidance information.

6. The method according to any one of claims 1 to 5, further comprising:
adding at least one noise of a preset level to a first basic image to obtain at least one of the first noise-containing image, the first basic image including the first image feature;
adding the at least one noise of the preset level to a second basic image to obtain at least one of the second noise-containing image, the second basic image including the second image feature; and
adding the at least one noise of a preset level to the third basic image to obtain at least one of the third noise-containing image, the third basic image including the first image feature and the second image feature.

7. The method according to any one of claims 1 to 6, wherein the first image feature is related to an image label, and the second image feature is not related to the image label; and
combining the first noise feature and the second noise feature to obtain the combined noise feature (250) includes:
determining the combined noise feature based on a weighted sum of the first noise feature and the second noise feature, a weight of the first noise feature being greater than a weight of the second noise feature.

8. The method according to any one of claims 1 to 7, wherein adjusting the model parameter (260) includes:
determining a combined prediction loss based on the combined noise feature and the third noise feature; and
adjusting the model parameter of the pre-selected model based on the combined prediction loss, to reduce the combined prediction loss.

9. The method according to any one of claims 1 to 8, wherein an initial model parameter of the pre-selected model is same as a model parameter of the noise prediction model.

10. An image generation method, comprising:
obtaining guidance information (1010);
inputting the guidance information into the image generation model (1020) determined through the method according to any one of claims 1 to 9; and
obtaining an image corresponding to the guidance information based on an output of the image generation model (1030).

11. The method according to claim 10, wherein obtaining the guidance information (1010) includes:
obtaining basic information; and
inputting the basic information into a text generation model to obtain the guidance information based on an output of the text generation model,
the text generation model being configured to perform at least one of expansion or modification on the inputted basic information according to a preset rule to output corresponding guidance information.

12. A computing device, comprising:
a memory, configured to store a computer-executable instruction; and
a processor, configured to perform the method according to any one of claims 1 to 11 when the computer-executable instruction is executed by the processor.

13. A computer-readable storage medium, having a computer-executable instruction stored therein, the computer-executable instruction, when executed, performing the method according to any one of claims 1 to 11.

14. A computer program product, comprising a computer-executable instruction, the computer-executable instruction, when executed by a processor, implementing operations of the method according to any one of claims 1 to 11.

## Patentansprüche

1. Verfahren (200) zur Bestimmung eines Bilderzeugungsmodells, **dadurch gekennzeichnet, dass** es umfasst:
Erhalten von ersten Leitinformationen, die ein erstes Bildmerkmal charakterisieren, und von zweiten Leitinformationen, die ein zweites Bildmerkmal charakterisieren (210);
Eingeben der ersten Leitinformationen und eines ersten rauschbehafteten Bildes in ein Rauschvorhersagemodell, um ein erstes Rausch-Merkmal aus dem ersten rauschbehafteten Bild zu identifizieren (220);
Eingeben der zweiten Leitinformationen und eines zweiten rauschbehafteten Bildes in das Rauschvorhersagemodell, um ein zweites Rausch-Merkmal aus dem zweiten rauschbehafteten Bild zu identifizieren (230);
Eingeben von kombinierten Leitinformationen und eines dritten rauschbehafteten Bildes in ein vorausgewähltes Modell, das die gleiche Modellstruktur wie das Rauschvorhersagemodell aufweist, um ein drittes Rausch-Merkmal aus dem dritten rauschbehafteten Bild zu identifizieren, wobei die kombinierten Leitinformationen die ersten Leitinformationen und die zweiten Leitinformationen umfassen (240);
Kombinieren des ersten Rausch-Merkmals und des zweiten Rausch-Merkmals, um ein kombiniertes Rausch-Merkmal zu erhalten (250); und
Anpassen eines Modellparameters des vorausgewählten Modells auf der Grundlage einer Differenz zwischen dem kombinierten Rausch-Merkmal und dem dritten Rausch-Merkmal, um das vorausgewählte Modell zu aktualisieren (260).

2. Verfahren nach Anspruch 1, wobei das erste rauschbehaftete Bild das erste Bildmerkmal umfasst, das zweite rauschbehaftete Bild das zweite Bildmerkmal umfasst und das dritte rauschbehaftete Bild das erste Bildmerkmal und das zweite Bildmerkmal umfasst.

3. Verfahren nach Anspruch 1 oder 2, wobei
das Eingeben der ersten Leitinformationen und des ersten rauschbehafteten Bildes in das Rauschvorhersagemodell zur Identifizierung des ersten Rausch-Merkmals (220) umfasst:
Eingeben der ersten Leitinformationen und mindestens eines der ersten rauschbehafteten Bilder in mindestens einem Zeitschritt des Rauschvorhersagemodells, um mindestens eines der ersten Rausch-Merkmale des mindestens einen ersten rauschbehafteten Bildes auf der Grundlage der Semantik der ersten Leitinformationen vorherzusagen;
und/oder
das Eingeben der zweiten Leitinformationen und des zweiten rauschbehafteten Bildes in das Rauschvorhersagemodell zur Identifizierung des zweiten Rausch-Merkmals (230) umfasst:
Eingeben der zweiten Leitinformationen und mindestens eines der zweiten rauschbehafteten Bilder in den mindestens einen Zeitschritt des Rauschvorhersagemodells, um mindestens eines der zweiten Rausch-Merkmale des mindestens einen zweiten rauschbehafteten Bildes auf der Grundlage der Semantik der zweiten Leitinformationen vorherzusagen;
und/oder
das Eingeben der kombinierten Leitinformationen und des dritten rauschbehafteten Bildes in das vorausgewählte Modell zur Identifizierung des dritten Rausch-Merkmals (240) umfasst:
Eingeben der kombinierten Leitinformationen und mindestens eines der dritten rauschbehafteten Bilder in mindestens einem Zeitschritt des vorausgewählten Modells, um mindestens eines der dritten Rausch-Merkmale des mindestens einen dritten rauschbehafteten Bildes auf der Grundlage der Semantik der kombinierten Leitinformationen vorherzusagen.

4. Verfahren nach Anspruch 3, wobei
das erste rauschbehaftete Bild und das zweite rauschbehaftete Bild in einem t-ten Zeitschritt des mindestens einen Zeitschritts des Rauschvorhersagemodells eingegeben werden; und
das dritte rauschbehaftete Bild in einem t-ten Zeitschritt des mindestens einen Zeitschritts des vorausgewählten Modells eingegeben wird.

5. Verfahren nach einem der Ansprüche 1 bis 4, wobei das Erhalten der ersten Leitinformationen und der zweiten Leitinformationen (210) umfasst:
Erhalten von ersten Basisinformationen und zweiten Basisinformationen; und
Eingeben der ersten Basisinformationen und der zweiten Basisinformationen in ein Texterzeugungsmodell, so dass das Texterzeugungsmodell mindestens einen der Vorgänge Erweiterung oder Modifikation an jeweils den ersten Basisinformationen und den zweiten Basisinformationen gemäß einer voreingestellten Regel durchführt, um die ersten Leitinformationen und die zweiten Leitinformationen zu erzeugen.

6. Verfahren nach einem der Ansprüche 1 bis 5, ferner umfassend:
Hinzufügen von mindestens einem Rauschen eines voreingestellten Pegels zu einem ersten Basisbild, um mindestens eines der ersten rauschbehafteten Bilder zu erhalten, wobei das erste Basisbild das erste Bildmerkmal umfasst;
Hinzufügen des mindestens einen Rauschens des voreingestellten Pegels zu einem zweiten Basisbild, um mindestens eines der zweiten rauschbehafteten Bilder zu erhalten, wobei das zweite Basisbild das zweite Bildmerkmal umfasst; und
Hinzufügen des mindestens einen Rauschens eines voreingestellten Pegels zu einem dritten Basisbild, um mindestens eines der dritten rauschbehafteten Bilder zu erhalten, wobei das dritte Basisbild das erste Bildmerkmal und das zweite Bildmerkmal umfasst.

7. Verfahren nach einem der Ansprüche 1 bis 6, wobei das erste Bildmerkmal mit einer Bildbezeichnung verknüpft ist und das zweite Bildmerkmal nicht mit der Bildbezeichnung verknüpft ist; und
das Kombinieren des ersten Rausch-Merkmals und des zweiten Rausch-Merkmals zur Erlangung des kombinierten Rausch-Merkmals (250) umfasst:
Bestimmen des kombinierten Rausch-Merkmals auf der Grundlage einer gewichteten Summe des ersten Rausch-Merkmals und des zweiten Rausch-Merkmals, wobei ein Gewicht des ersten Rausch-Merkmals größer ist als ein Gewicht des zweiten Rausch-Merkmals.

8. Verfahren nach einem der Ansprüche 1 bis 7, wobei das Anpassen des Modellparameters (260) umfasst:
Bestimmen eines kombinierten Vorhersageverlusts auf der Grundlage des kombinierten Rausch-Merkmals und des dritten Rausch-Merkmals; und
Anpassen des Modellparameters des vorausgewählten Modells auf der Grundlage des kombinierten Vorhersageverlusts, um den kombinierten Vorhersageverlust zu reduzieren.

9. Verfahren nach einem der Ansprüche 1 bis 8, wobei ein anfänglicher Modellparameter des vorausgewählten Modells identisch mit einem Modellparameter des Rauschvorhersagemodells ist.

10. Bilderzeugungsverfahren, umfassend:
Erhalten von Leitinformationen (1010);
Eingeben der Leitinformationen in das Bilderzeugungsmodell (1020), das durch das Verfahren nach einem der Ansprüche 1 bis 9 bestimmt wird; und
Erhalten eines den Leitinformationen entsprechenden Bildes auf der Grundlage einer Ausgabe des Bilderzeugungsmodells (1030).

11. Verfahren nach Anspruch 10, wobei das Erhalten der Leitinformationen (1010) umfasst:
Erhalten von Basisinformationen; und
Eingeben der Basisinformationen in ein Texterzeugungsmodell, um die Leitinformationen auf der Grundlage einer Ausgabe des Texterzeugungsmodells zu erhalten,
wobei das Texterzeugungsmodell konfiguriert ist, mindestens einen der Vorgänge Erweiterung oder Modifikation an den eingegebenen Basisinformationen gemäß einer voreingestellten Regel durchzuführen, um entsprechende Leitinformationen auszugeben.

12. Rechenvorrichtung, umfassend:
einen Speicher, konfiguriert zum Speichern einer computerausführbaren Anweisung; und
einen Prozessor, konfiguriert zur Ausführung des Verfahrens nach einem der Ansprüche 1 bis 11, wenn die computerausführbare Anweisung durch den Prozessor ausgeführt wird.

13. Computerlesbares Speichermedium, in dem eine computerausführbare Anweisung gespeichert ist, wobei die computerausführbare Anweisung bei ihrer Ausführung das Verfahren nach einem der Ansprüche 1 bis 11 ausführt.

14. Computerprogrammprodukt, umfassend eine computerausführbare Anweisung, wobei die computerausführbare Anweisung bei ihrer Ausführung durch einen Prozessor die Operationen des Verfahrens nach einem der Ansprüche 1 bis 11 implementiert.

## Revendications

1. Procédé (200) de détermination d'un modèle de génération d'image, **caractérisé en ce qu'**il comprend :
l'obtention d'une première information de guidage caractérisant un premier attribut d'image et d'une deuxième information de guidage caractérisant un deuxième attribut d'image (210) ;
l'entrée de la première information de guidage et d'une première image contenant du bruit dans un modèle de prédiction de bruit, pour identifier un premier attribut de bruit à partir de la première image contenant du bruit (220) ;
l'entrée de la deuxième information de guidage et d'une deuxième image contenant du bruit dans le modèle de prédiction de bruit, pour identifier un deuxième attribut de bruit à partir de la deuxième image contenant du bruit (230) ;
l'entrée d'une information de guidage combinée et d'une troisième image contenant du bruit dans un modèle présélectionné ayant une même structure de modèle que le modèle de prédiction de bruit, pour identifier un troisième attribut de bruit à partir de la troisième image contenant du bruit, l'information de guidage combinée comprenant la première information de guidage et la deuxième information de guidage (240) ;
la combinaison du premier attribut de bruit et du deuxième attribut de bruit pour obtenir un attribut de bruit combiné (250) ; et
le réglage d'un paramètre de modèle du modèle présélectionné sur la base d'une différence entre l'attribut de bruit combiné et le troisième attribut de bruit, pour mettre à jour le modèle présélectionné (260).

2. Procédé selon la revendication 1, dans lequel la première image contenant du bruit comprend le premier attribut d'image, la deuxième image contenant du bruit comprend le deuxième attribut d'image, et la troisième image contenant du bruit comprend le premier attribut d'image et le deuxième attribut d'image.

3. Procédé selon la revendication 1 ou 2, dans lequel
l'entrée de la première information de guidage et de la première image contenant du bruit dans le modèle de prédiction de bruit pour identifier le premier attribut de bruit (220) comprend :
l'entrée de la première information de guidage et d'au moins une de la première image contenant du bruit dans au moins un pas de temps du modèle de prédiction de bruit, pour prédire au moins un du premier attribut de bruit de la ou des premières images contenant du bruit sur la base de la sémantique de la première information de guidage ;
et/ou
l'entrée de la deuxième information de guidage et de la deuxième image contenant du bruit dans le modèle de prédiction de bruit pour identifier le deuxième attribut de bruit (230) comprend :
l'entrée de la deuxième information de guidage et d'au moins une de la deuxième image contenant du bruit dans le ou les pas de temps du modèle de prédiction de bruit, pour prédire au moins un du deuxième attribut de bruit de la ou des deuxièmes images contenant du bruit sur la base de la sémantique de la deuxième information de guidage ;
et/ou
l'entrée de l'information de guidage combinée et de la troisième image contenant du bruit dans le modèle présélectionné pour identifier le troisième attribut de bruit (240) comprend :
l'entrée de l'information de guidage combinée et d'au moins une de la troisième image contenant du bruit dans au moins un pas de temps du modèle présélectionné, pour prédire au moins un du troisième attribut de bruit de la ou des troisièmes images contenant du bruit sur la base de la sémantique de l'information de guidage combinée.

4. Procédé selon la revendication 3, dans lequel
la première image contenant du bruit et la deuxième image contenant du bruit sont entrées lors d'un t-ième pas de temps du ou des pas de temps du modèle de prédiction de bruit ; et
la troisième image contenant du bruit est entrée lors d'un t-ième pas de temps du ou des pas de temps du modèle présélectionné.

5. Procédé selon l'une quelconque des revendications 1 à 4, dans lequel l'obtention de la première information de guidage et de la deuxième information de guidage (210) comprend :
l'obtention d'une première information de base et d'une deuxième information de base ; et
l'entrée de la première information de base et de la deuxième information de base dans un modèle de génération de texte, de sorte que le modèle de génération de texte effectue au moins l'une des opérations d'expansion ou de modification sur chacune de la première information de base et de la deuxième information de base selon une règle prédéfinie, pour générer la première information de guidage et la deuxième information de guidage.

6. Procédé selon l'une quelconque des revendications 1 à 5, comprenant en outre :
l'ajout d'au moins un bruit d'un niveau prédéfini à une première image de base pour obtenir au moins une des premières images contenant du bruit, la première image de base comprenant le premier attribut d'image ;
l'ajout du ou des bruits du niveau prédéfini à une deuxième image de base pour obtenir au moins une des deuxièmes images contenant du bruit, la deuxième image de base comprenant le deuxième attribut d'image ; et
l'ajout du ou des bruits d'un niveau prédéfini à une troisième image de base pour obtenir au moins une des troisièmes images contenant du bruit, la troisième image de base comprenant le premier attribut d'image et le deuxième attribut d'image.

7. Procédé selon l'une quelconque des revendications 1 à 6, dans lequel le premier attribut d'image est associé à une étiquette d'image, et le deuxième attribut d'image n'est pas associé à l'étiquette d'image ; et
la combinaison du premier attribut de bruit et du deuxième attribut de bruit pour obtenir l'attribut de bruit combiné (250) comprend :
la détermination de l'attribut de bruit combiné sur la base d'une somme pondérée du premier attribut de bruit et du deuxième attribut de bruit, un poids du premier attribut de bruit étant supérieur à un poids du deuxième attribut de bruit.

8. Procédé selon l'une quelconque des revendications 1 à 7, dans lequel le réglage du paramètre de modèle (260) comprend :
la détermination d'une perte de prédiction combinée sur la base de l'attribut de bruit combiné et du troisième attribut de bruit ; et
le réglage du paramètre de modèle du modèle présélectionné sur la base de la perte de prédiction combinée, pour réduire la perte de prédiction combinée.

9. Procédé selon l'une quelconque des revendications 1 à 8, dans lequel un paramètre de modèle initial du modèle présélectionné est identique à un paramètre de modèle du modèle de prédiction de bruit.

10. Procédé de génération d'image, comprenant :
l'obtention d'une information de guidage (1010) ;
l'entrée de l'information de guidage dans le modèle de génération d'image (1020) déterminé par le procédé selon l'une quelconque des revendications 1 à 9 ; et
l'obtention d'une image correspondant à l'information de guidage sur la base d'une sortie du modèle de génération d'image (1030).

11. Procédé selon la revendication 10, dans lequel l'obtention de l'information de guidage (1010) comprend :
l'obtention d'une information de base ; et
l'entrée de l'information de base dans un modèle de génération de texte pour obtenir l'information de guidage sur la base d'une sortie du modèle de génération de texte,
le modèle de génération de texte étant configuré pour effectuer au moins l'une des opérations d'expansion ou de modification sur l'information de base entrée selon une règle prédéfinie pour délivrer en sortie l'information de guidage correspondante.

12. Dispositif informatique, comprenant :
une mémoire, configurée pour stocker une instruction exécutable par ordinateur ; et
un processeur, configuré pour exécuter le procédé selon l'une quelconque des revendications 1 à 11 lorsque l'instruction exécutable par ordinateur est exécutée par le processeur.

13. Support de stockage lisible par ordinateur, ayant une instruction exécutable par ordinateur stockée dans celui-ci, l'instruction exécutable par ordinateur, lorsqu'elle est exécutée, exécutant le procédé selon l'une quelconque des revendications 1 à 11.

14. Produit de programme informatique, comprenant une instruction exécutable par ordinateur, l'instruction exécutable par ordinateur, lorsqu'elle est exécutée par un processeur, mettant en œuvre les opérations du procédé selon l'une quelconque des revendications 1 à 11.
